# EUROPÄISCHE PATENTSCHRIFT

(11) **EP 1 687 462 B1**
(45) Veröffentlichungstag und Bekanntmachung des Hinweises auf die Patenterteilung: **13.03.2019**
(21) Anmeldenummer: 04818813.0
(22) Anmeldetag: 22.11.2004
(51) Int. Cl.: C25B 3/12

(54) **VERFAHREN ZUR ELEKTROCHEMISCHEN HERSTELLUNG EINES KRISTALLINEN POROESEN METALLORGANISCHEN GERUESTMATERIALS**
METHOD FOR ELECTROCHEMICAL PRODUCTION OF A CRYSTALLINE POROUS METAL ORGANIC SKELETON MATERIAL
PROCEDE DE PRODUCTION ELECTROCHIMIQUE D'UN SQUELETTE ORGANOMETALLIQUE POREUX CRISTALLIN

(30) Priorität: 24.11.2003 DE 10355087
(43) Veröffentlichungstag der Anmeldung: 09.08.2006
(73) Patentinhaber: Fraunhofer-Gesellschaft zur Förderung der angewandten Forschung e.V., 80686 München (DE)
(72) Erfinder: MÜLLER, Ulrich, 67435 Neustadt (DE); PÜTTER, Hermann, 67433 Neustadt (DE); HESSE, Michael, 67549 Worms (DE); WESSEL, Helge, 68167 Mannheim (DE); SCHUBERT, Markus, 67063 Ludwigshafen (DE); HUFF, Jürgen, 67063 Ludwigshafen (DE); GUZMANN, Marcus, 69242 Mühlhausen (DE)
(74) Vertreter: Büchel, Edwin
(86) Internationale Anmeldenummer: PCT/EP2004/013236
(87) Internationale Veröffentlichungsnummer: WO 2005/049892

(56) Entgegenhaltungen:
- WO-A-02/070526
- DE-U1- 20 210 139
- FR-A- 2 202 060
- FR-A- 2 389 636
- FR-A- 2 708 002
- US-A- 4 599 150
- PATENT ABSTRACTS OF JAPAN Bd. 1998, Nr. 01, 30. Januar 1998 (1998-01-30) & JP 09 227571 A (OSAKA GAS CO LTD), 2. September 1997 (1997-09-02)

## Beschreibung

Die vorliegende Erfindung betrifft ein Verfahren zur elektrochemischen Herstellung eines kristallinen, porösen metallorganischen Gerüstmaterials. Im Rahmen dieses Verfahrens wird das im Gerüstmaterial enthaltene Metallion zumindest teilweise über anodische Oxidation bereitgestellt. Ebenso betrifft die vorliegende Erfindung das erfindungsgemäß hergestellt Gerüstmaterial an sich sowie bevorzugte Verwendungen, beispielsweise als Speichermedium für Flüssigkeiten und Gase.

Kristalline poröse metallorganische Gerüstmaterialien, so genannte "Metal-Organic Frameworks" (MOF) mit bestimmten Poren bzw. Porenverteilungen und großen spezifischen Oberflächen sind gerade in jüngster Zeit Ziel umfangreicher Forschungstätigkeiten.

So beschreibt beispielsweise die US 5,648,508 mikroporöse metallorganische Materialien, die unter milden Reaktionsbedingungen aus einem Metallion und einem Liganden in Anwesenheit einer Templatverbindung hergestellt werden.

Die WO 02/088148 offenbart die Herstellung einer Reihe von Verbindungen, die die gleiche Gerüsttopologie aufweisen. Diese so genannten IMOF (Isoreticular Metal-Organic Framework)-Strukturen stellen monokristalline und mesoporöse Gerüstmaterialien dar, die eine sehr hohe Speicherkapazität für Gase aufweisen.

Eddaoudi et al., Science, 295 (2002) S. 469-472, beschreiben beispielsweise die Herstellung eines so genannten MOF-5, bei dem ausgegangen wird von einem Zinksalz, d.h. Zinknitrat, wobei zur Synthese des MOF dieses Salz und 1,4-Benzoldicarbonsäure (BDC) in N,N'-Diethylformamid (DEF) gelöst sind.

Chen et al., Science, 291 (2001) S. 1021-1023, beschreiben beispielsweise die Herstellung eines so genannten MOF-14, bei dem ausgegangen wird von einem Kupfersalz, d.h. Kupfernitrat, wobei zur Synthese des MOF dieses Salz und 4,4',4"-Benzol-1,3,5-triyltribenzoesäure (H₃BTC) in N,N'-Dimethylformamid (DMF) und Wasser gelöst sind.

FR 2 202 060 A1 beschreibt ein Verfahren zur chemischen Synthese von metallorganischen Zusammensetzungen. Hierbei wird das Metall, das den Komplex bilden soll, anodisch oxidiert und so einer Reaktionslösung, die eine organische Verbindung enthält, zugeführt.

FR 2 708 002 A1 beschreibt ein Verfahren zur Herstellung von metallorganischen Komplexen, in dem eine wasserlösliche organische Verbindung, die eine funktionelle Carbonyl-Gruppe enthält, mit einem Metall komplexiert ist.

DE 202 10 139 U1 beschreibt eine Vorrichtung zum Speichern, zur Aufnahme und Abgabe von Gasen unter Verwendung neuartiger Gerüstmaterialien.

JP 09227571 A beschreibt einen Metall-Komplex, der aus einem bivalenten Metallion und einem organischen Liganden zur Bildung einer zweizähnigen Koordination besteht. Der Komplex kann Gasmoleküle im Raum des Kristallgitters adsorbieren und speichern.

FR 2 389 636 A1 beschreibt die elektrochemische Herstellung von Ferrocenen ausgehend von Eisen und Cyclopentadien oder seinen Derivaten.

WO 02/070526 A1 betrifft ein Verfahren zur Herstellung eines metallorganischen Gerüstmaterials in Gegenwart einer Base und eines Lösungsmittels, wobei das Lösungsmittel mindestens ein cyclisches Amid (Lactam) und/oder mindestens einen cyclischen Ester (Lacton), enthält.

US 4 599 150 A beschreibt ein Verfahren zur Herstellung eines Addukts einer organometallischen Verbindung durch Elektrolysieren.

Im Stand der Technik werden demgemäß für die Herstellung dieser porösen metallorganischen Gerüstmaterialien stets Verfahren beschrieben, in denen das Metallion, an das die Liganden koordinativ gebunden sind, über eine entsprechende Metallsalzlösung bereitgestellt wird, wobei in jedem Fall eine Lösung, die das gelöste Metallsalz enthält, mit einem Liganden in Gegenwart einer geeigneten Templatverbindung in Kontakt gebracht wird.

Diese Vorgehensweise weist allerdings gravierende sicherheitstechnische Probleme auf, da beispielsweise bei der Herstellung von kupferhaltigen metallorganischen Gerüstmaterialien in der Lösung neben Kupferionen in vielen Fällen auch Nitrat-Anionen vorliegen, die über das Kupfersalz in das Reaktionssystem eingebracht werden. Aus der Synthese resultieren dann hochoberflächige Metallkomplexe in konzentrierten, nitrathaltigen Phasen, wobei in den Phasen außerdem organische Lösungsmittel enthalten sind. Solche Phasen können beim Überhitzen zur spontanen Zersetzung neigen. Verwendet man hingegen statt einer nitrathaltigen Metallsalzlösung eine Lösung auf der Basis von Halogeniden, wie dies im Stand der Technik ebenfalls in vielen Fällen beschrieben ist, so führt dies in der technischen Anwendung zur schnellen Korrosion an Apparatebauteilen, weshalb teure korrosionsbeständige Werkstoffe benötigt werden.

Eine der der vorliegenden Erfindung zugrunde liegenden Aufgaben war es daher, ein Verfahren bereitzustellen, das diese Nachteile nicht aufweist.

Diese Aufgabe wurde durch ein Verfahren gelöst, das von einem völlig andersartigen Ansatz ausgeht und in dem das Metallion, an dem der Ligand des Gerüstmaterials koordinativ gebunden ist, nicht über ein Metallsalz, sondern auf elektrochemischem Weg bereitgestellt wird. Im Rahmen des erfindungsgemäßen Verfahrens wird daher das mindestens eine Metallion im metallorganischen Gerüstmaterial zumindest teilweise über anodische Oxidation in das Reaktionssystem eingebracht.

Demgemäß betrifft die vorliegende Erfindung ein Verfahren zur elektrochemischen Herstellung eines kristallinen porösen metallorganischen Gerüstmaterials, enthaltend mindestens eine an mindestens ein Metallion koordinativ gebundene, mindestens zweizähnige organische Verbindung ausgewählt aus der Gruppe bestehend aus Di-, Tri- und Tetracarbonsäure, in einem Reaktionsmedium, enthaltend die mindestens eine zweizähnige organische Verbindung, dadurch gekennzeichnet, dass im Reaktionsmedium mindestens ein Metallion durch Oxidation mindestens einer das entsprechende Metall enthaltenden Anode bereitgestellt wird.

Weiterhin betrifft die vorliegende Erfindung ein Verfahren zur elektrochemischen Herstellung eines kristallinen porösen metallorganischen Gerüstmaterials, enthaltend mindestens eine an mindestens ein Metallion koordinativ gebundene, mindestens zweizähnige organische Verbindung, in einem Reaktionsmedium, enthaltend die mindestens eine mindestens zweizähnige organische Verbindung, wobei im Reaktionsmedium mindestens ein Metallion durch Oxidation mindestens einer das entsprechende Metall enthaltenden Anode bereitgestellt wird, dadurch gekennzeichnet, dass die kathodische

Wiederabscheidung des mindestens einen Metallions durch mindestens eine der folgenden Maßnahmen zumindest teilweise verhindert wird:
(i) Verwendung eines Elektrolyten, der die kathodische Bildung von Wasserstoff begünstigt;
(ii) Zusatz mindestens einer Verbindung, die zu einer kathodischen Depolarisation führt;
(iii) Einsatz einer Kathode mit einer geeigneten Wasserstoffüberspannung.

Der Begriff "elektrochemische Herstellung", wie er im Rahmen der vorliegenden Erfindung verwendet wird, bezeichnet ein Herstellverfahren, bei denen die Bildung mindestens eines Reaktionsproduktes mit der Wanderung von elektrischen Ladungen oder dem Auftreten von elektrischen Potentialen verbunden ist.

Der Begriff "mindestens ein Metallion", wie er im Rahmen der vorliegenden Erfindung verwendet wird, bezeichnet Ausführungsformen, gemäß denen mindestens ein lon eines Metalls oder mindestens ein lon eines ersten Metalls und mindestens ein lon mindestens eines vom ersten Metall verschiedenen zweiten Metalls durch anodische Oxidation bereit gestellt werden.

Demgemäß umfasst die vorliegende Erfindung Ausführungsformen, in denen mindestens ein Ion mindestens eines Metalls durch anodische Oxidation und mindestens ein Ion mindestens eines Metalls über ein Metallsalz bereit gestellt werden, wobei das mindestens eine Metall im Metallsalz und das mindestens eine Metall, das über anodische Oxidation als Metallion bereit gestellt werden, gleich oder voneinander verschieden sein können. Daher umfasst die vorliegende Erfindung beispielsweise eine Ausführungsform, gemäß der das Reaktionsmedium ein oder mehrere unterschiedliche Salze eines Metalls enthält und das in diesem Salze oder in diesen Salzen enthaltene Metallion zusätzlich durch anodische Oxidation mindestens einer dieses Metall enthaltenden Anode bereitgestellt wird. Ebenso umfasst die vorliegende Erfindung eine Ausführungsform, gemäß der das Reaktionsmedium ein oder mehrere unterschiedliche Salze mindestens eines Metalls enthält und mindestens ein von diesen Metallen unterschiedliches Metall über anodische Oxidation als Metallion im Reaktionsmedium bereitgestellt wird.

Gemäß einer bevorzugten Ausführungsform der vorliegenden Erfindung wird das mindestens eine Metallion durch anodische Oxidation mindestens einer der dieses mindestens eine Metall enthaltenden Anode bereitgestellt, wobei kein weiteres Metall über ein Metallsalz bereitgestellt wird.

Demgemäß umfasst die vorliegende Erfindung eine Ausführungsform, gemäß der die mindestens eine Anode ein einziges oder zwei oder mehr Metalle enthält, wobei im Falle, dass die Anode ein einziges Metall enthält, dieses Metall durch anodische Oxidation bereitgestellt wird und im Falle, dass die Anode zwei oder mehr Metalle enthält, mindestens eines dieser Metalle durch anodische Oxidation bereitgestellt wird.

Weiterhin umfasst die vorliegende Erfindung eine Ausführungsform, gemäß der mindestens zwei Anoden verwendet werden, wobei die beiden gleich oder verschieden voneinander sein können. Jede der mindestens zwei Anoden kann hierbei ein einziges oder zwei oder mehr Metalle enthalten. Hierbei ist es beispielsweise möglich, dass zwei unterschiedliche Anoden die gleichen Metalle, diese jedoch in unterschiedlichen Anteilen enthalten. Ebenso ist es beispielsweise im Falle unterschiedlicher Anoden möglich, dass eine erste Anode ein erstes Metall enthält und eine zweite Anode ein zweites Metall enthält, wobei die erste Anode das zweite Metall und/oder die zweite Anode das erste Metall nicht enthält.

Der Begriff "Metall", wie im Rahmen der vorliegenden Erfindung verwendet wird, umfasst sämtliche Elemente des Periodensystems, die über anodische Oxidation auf elektrochemischem Weg in einem Reaktionsmedium bereitgestellt werden können und mit mindestens einer mindestens zweizähnigen organischen Verbindung mindestens ein metallorganisches poröses Gerüstmaterial zu bilden in der Lage sind. Insbesondere bevorzugt werden im Rahmen der vorliegenden Erfindung Elemente der Gruppen la, IIa, lila, IVa bis Villa sowie Ib und VIb des Periodensystems der Elemente. Unter diesen Elementen sind Mg, Ca, Sr, Ba, Sc, Y, Ti, Zr, Hf, V, Nb, Ta, Cr, Mo, W, Mn, Re, Fe, Ru, Os, Co, Rh, Ir, Ni, Pd, Pt, Cu, Ag, Au, Zn, Cd, Hg, Al, Ga, In, TI, Si, Ge, Sn, Pb, As, Sb und Bi bevorzugt. Weiter bevorzugt sind Zn, Cu, Ni, Pd, Pt, Ru, Rh, Fe, Mn, Ag und Co. Im Rahmen der vorliegenden Erfindung werden weiter bevorzugt Cu, Fe, Co, Zn, Mn und Ag. Insbesondere bevorzugt sind Cu, Fe und Zn.

Als Metallionen, die über anodische Oxidation im Reaktionsmedium bereit gestellt werden, sind insbesondere Mg²⁺, Ca²⁺, Sr²⁺, Ba²⁺, Sc³⁺, Y³⁺, Ti⁴⁺, Zr4⁺, Hf⁴⁺, V⁴⁺, V³⁺, V²⁺, Nb³⁺, Ta³⁺, Cr³⁺, Mo³⁺, W³⁺, Mn³⁺, Mn²⁺, Re³⁺, Re²⁺, Fe³⁺, Fe²⁺, Ru³⁺, Ru²⁺, Os³⁺, Os²⁺, Co³⁺, Co²⁺, Rh²⁺, Rh⁺, Ir²⁺, Ir⁺, Ni²⁺, Ni⁺, Pd²⁺, Pd⁺, Pt²⁺, Pt⁺, Cu²⁺, Cu⁺, Ag⁺, Au⁺, Zn²⁺, Cd²⁺, Hg²⁺, Al³⁺, Ga³⁺, In³⁺, Tl³⁺, Si⁴⁺, Si²⁺, Ge⁴⁺, Ge²⁺, Sn⁴⁺, Sn²⁺, Pb⁴⁺, Pb²⁺, As⁵⁺, As³⁺, As⁺, Sb⁵⁺, Sb³⁺, Sb⁺, Bi⁵⁺, Bi³⁺ und Bi⁺ zu nennen. Besonders bevorzugt sind Cu²⁺, Cu⁺, Fe²⁺. Fe³⁺, Zn²⁺, Co³⁺, Co²⁺, Ag⁺, Mg²⁺ und Mn²⁺. Insbesondere bevorzugt sind Cu²⁺, Cu⁺, Fe²⁺; Fe³⁺ und Zn²⁺.

Demgemäß beschreibt die vorliegende Erfindung auch ein wie oben beschriebenes Verfahren, das dadurch gekennzeichnet ist, dass als Metallionenquelle eine Kupfer und/oder eine Eisen und/oder eine Zink und/oder eine Silber und/oder eine Mangan enthaltende Anode eingesetzt wird.

Ebenso beschreibt die vorliegende Erfindung auch ein wie oben beschriebenes Verfahren, das dadurch gekennzeichnet ist, dass als Metallionenquelle eine Kupfer und/oder eine Eisen und/oder eine Zink und/oder eine Mangan enthaltende Anode eingesetzt wird.

Gemäß einer bevorzugten Ausführungsform betrifft die vorliegende Erfindung auch ein wie oben beschriebenes Verfahren, das dadurch gekennzeichnet ist, dass als Metallionenquelle eine Kupfer und/oder eine Eisen und/oder eine Zink enthaltende Anode eingesetzt wird.

Der Aufbau der im erfindungsgemäßen Verfahren eingesetzten Anode kann grundsätzlich beliebig gewählt werden, solange gewährleistet ist, dass durch anodische Oxidation das mindestens eine Metallion im Reaktionsmedium zur Bildung des porösen metallorganischen Gerüstmaterials bereit gestellt werden kann.

Unter anderem bevorzugt sind Anoden in Form eines Stabs und/oder eines Rings und/oder einer Scheibe wie beispielsweise einer Ringscheibe und/oder einer Platte und/oder eines Rohrs und/oder einer Schüttung und/oder eines Zylinders und/oder eines Kegels und/oder eines Kegelstumpfs.

Gemäß einer bevorzugten Ausführungsform wird das erfindungsgemäße Verfahren unter Verwendung mindestens einer Opferanode durchgeführt. Der Begriff "Opferanode", wie er im Rahmen der vorliegenden Erfindung verwendet wird, bezeichnet eine Anode, die sich im Laufe des erfindungsgemäßen Verfahrens mindestens teilweise auflöst. Dabei werden auch Ausführungsformen erfasst, bei denen mindestens ein Teil des sich aufgelösten Anodenmaterials im Lauf des Verfahrens ersetzt wird. Dies kann beispielsweise dadurch bewerkstelligt werden, dass mindestens eine neue Anode in das Reaktionssystem eingebracht wird oder gemäß einer bevorzugten Ausführungsform eine Anode in das Reaktionssystem eingebracht wird und im Verlauf des erfindungsgemäßen Verfahrens kontinuierlich oder diskontinuierlich in das Reaktionssystem nachgeführt wird.

Bevorzugt werden im erfindungsgemäßen Verfahren Anoden eingesetzt, die aus dem mindestens einen Metall, das als Metallionenquelle dient, bestehen oder dieses mindestens eine Metall auf mindestens ein geeignetes Trägermaterial aufgebracht enthalten.

Die Geometrie des mindestens einen Trägermaterials unterliegt im Wesentlichen keinen Beschränkungen. Möglich ist beispielsweise der Einsatz von Trägermaterialien in Form eines Gewebes und/oder einer Folie und/oder eines Filzes und/oder eines Siebes und/oder Stabs und/oder einer Kerze und/oder eines Kegels und/oder eines Kegelstumpfes und/oder eines Rings und/oder einer Scheibe und/oder einer Platte und/oder eines Rohrs und/oder einer Schüttung und/oder eines Zylinders.

Als Trägermaterialien kommen erfindungsgemäß beispielsweise Metalle wie beispielsweise mindestens eines der oben genannten Metalle, Legierungen wie beispielsweise Stähle oder Bronzen oder Messing, Graphit, Filz oder Schäume in Betracht.

Ganz besonders bevorzugt sind Anoden, die aus dem mindestens einen Metall, das als Metallionenquelle dient, bestehen.

Der Aufbau der im erfindungsgemäßen Verfahren eingesetzten Kathode kann grundsätzlich beliebig gewählt werden, solange gewährleistet ist, dass durch anodische Oxidation das mindestens eine Metallion im Reaktionsmedium zur Bildung des porösen metallorganischen Gerüstmaterials bereit gestellt werden kann.

Gemäß einer bevorzugten Ausführungsform des erfindungsgemäßen Verfahrens wird das elektrisch leitende Elektrodenmaterial der mindestens einen Kathode so gewählt, dass im Reaktionsmedium keine störende Nebenreaktion stattfindet. Als unter anderem bevorzugte Kathodenmaterialien sind unter anderem Graphit, Kupfer, Zink, Zinn, Mangan, Silber, Gold, Platin oder Legierungen wie beispielsweise Stähle, Bronzen oder Messing zu nennen.

Als unter anderem bevorzugte Kombinationen des als Metallionenquelle dienenden Anodenmaterials und des elektrisch leitenden Kathodenmaterials sind beispielsweise zu nennen:

| **Anode** | **Kathode** |
|---|---|
| Zink | Zink |
| Kupfer | Kupfer |
| Magnesium | Kupfer |
| Cobalt | Cobalt |
| Eisen | Stahl |
| Kupfer | Stahl |

Die Geometrie der mindestens einen Kathode unterliegt im Wesentlichen keinen Beschränkungen. Möglich ist beispielsweise der Einsatz von Kathoden in Form eines Stabs und/oder eines Rings und/oder einer Scheibe und/oder einer Platte und/oder eines Rohrs.

Im Rahmen der vorliegenden Erfindung kann im Wesentlichen jeder der in der Elektrochemie üblichen Zellentypen verwendet werden. Ganz besonders bevorzugt wird im erfindungsgemäßen Verfahren eine Elektrolysezelle, die für den Einsatz von Opferelektroden geeignet ist.

Grundsätzlich ist es unter anderem möglich, geteilte Zellen mit beispielsweise planparalleler Elektrodenanordnung oder kerzenförmigen Elektroden einzusetzen. Als Trennmedium zwischen den Zellkompartimenten können beispielsweise lonenaustauschermembranen, mikroporöse Membranen, Diaphragmen, Filtergewebe aus nichtelektronenleitenden Materialien, Glasfritten und/oder poröse Keramiken eingesetzt werden. Vorzugsweise werden lonenaustauschermembranen, insbesondere Kationenaustauschermembranen, verwendet, wobei darunter wiederum solche Membranen vorzugsweise verwendet werden, die aus einem Copolymer aus Tetrafluorethylen und einem perfluorierten Monomer, das Sulfonsäuregruppen enthält, bestehen.

Im Rahmen einer bevorzugten Ausführungsform des erfindungsgemäßen Verfahrens werden bevorzugt eine oder mehrere ungeteilte Zellen eingesetzt.

Demgemäß betrifft die vorliegende Erfindung auch ein wie oben beschriebenes Verfahren, das dadurch gekennzeichnet ist, dass das Verfahren in einer ungeteilten Elektrolysezelle durchgeführt wird.

Ganz besonders bevorzugt werden Kombinationen von Geometrien aus Anode und Kathode, bei denen die einander zugewandten Seiten der Anode und Kathode gemeinsam einen Spalt von homogener Dicke ausbilden.

In der mindestens einen ungeteilten Zelle werden die Elektroden beispielsweise bevorzugt planparallel angeordnet, wobei der Elektrodenspalt eine homogene Dicke beispielsweise im Bereich von 0,5 mm bis 30 mm, bevorzugt im Bereich von 0,75 mm bis 20 mm und besonders bevorzugt im Bereich von 1 bis 10 mm aufweist.

Im Rahmen einer bevorzugten Ausführungsform ist es beispielsweise möglich, eine Kathode und eine Anode derart planparallel anzuordnen, dass in der entstehenden Zelle ein Elektrodenspalt mit einer homogenen Dicke im Bereich von 0,5 bis 30 mm, bevorzugt im Bereich von 1 bis 20 mm, weiter bevorzugt im Bereich von 5 bis 15 mm und insbesondere bevorzugt im Bereich von 8 bis 12 mm wie beispielsweise im Bereich von ungefähr 10 mm ausgebildet wird. Diese Art der Zelle wird im Rahmen der vorliegenden Erfindung mit dem Begriff "Spaltzelle" bezeichnet.

Gemäß einer bevorzugten Ausführungsform des erfindungsgemäßen Verfahrens wird die obenstehend beschriebene Zelle als bipolar geschaltete Zelle eingesetzt.

Neben der oben beschriebenen Zelle werden gemäß einer ebenfalls bevorzugten Ausführungsform im Rahmen des erfindungsgemäßen Verfahrens die Elektroden einzeln oder zu mehreren gestapelt angewendet. Im letzteren Fall handelt es sich um so genannte Stapelelektroden, die in der demgemäß so genannten Plattenstapelzelle bevorzugt seriell bipolar geschaltet werden. Insbesondere für die Ausübung des erfindungsgemäßen Verfahrens im industriellen Maßstab werden bevorzugt mindestens eine Topfzelle und insbesondere bevorzugt seriell geschaltete Plattenstapelzellen eingesetzt, deren prinzipieller Aufbau in der DE 195 33 773 A1 beschrieben sind, deren diesbezüglicher Inhalt durch Bezugnahme in den Kontext der vorliegenden Anmeldung vollumfänglich einbezogen wird.

Im Rahmen der bevorzugten Ausführungsform der Plattenstapelzelle ist es beispielsweise bevorzugt, Scheiben aus geeigneten Materialien wie beispielsweise Kupferscheiben derart planparallel anzuordnen, dass zwischen den einzelnen Scheiben jeweils ein Spalt mit einer homogenen Dicke im Bereich von 0,5 bis 30 mm, bevorzugt im Bereich von 0,6 bis 20 mm, weiter bevorzugt im Bereich von 0,7 bis 10 mm, weiter bevorzugt im Bereich von 0,8 bis 5 mm und insbesondere im Bereich von 0,9 bis 2 mm wie beispielsweise im Bereich von ungefähr 1 mm ausgebildet wird. Dabei können die Abstände zwischen den einzelnen Scheiben gleich oder verschieden sein, wobei gemäß einer besonders bevorzugten Ausführungsform die Abstände zwischen den Scheiben im Wesentlichen gleich sind. Gemäß einer weiteren Ausführungsform kann sich das Material einer Scheibe der Plattenstapelzelle von dem Material einer anderen Scheibe der Plattenstapelzelle unterscheiden. Beispielsweise kann eine Scheibe aus Graphit, eine andere Scheibe aus Kupfer gefertigt sein, wobei die Kupferscheibe bevorzugt als Anode und die Graphitscheibe bevorzugt als Kathode geschaltet ist.

Weiterhin ist es im Rahmen der vorliegenden Erfindung beispielsweise bevorzugt, so genannte "pencil sharpener"-Zellen zu verwenden, wie sie beispielsweise in J. Chaussard et al., J. Appl. Electrochem. 19 (1989) 345-348 beschrieben sind, deren diesbezüglicher Inhalt durch Bezugnahme in den Kontext der vorliegenden Anmeldung vollumfänglich einbezogen wird. Insbesondere bevorzugt werden im erfindungsgemäßen Verfahren Pencil-Sharpener-Elektroden mit stabförmigen, nachführbaren Elektroden eingesetzt.

Insbesondere betrifft demgemäß die vorliegende Erfindung auch ein wie oben beschriebenes Verfahren, das dadurch gekennzeichnet ist, dass das Verfahren in einer Spaltzelle oder Plattenstapelzelle durchgeführt wird.

Zellen, bei denen der Elektrodenabstand im Bereich von kleiner oder gleich 1 mm liegt, werden als Kapillarspaltzellen bezeichnet.

Gemäß ebenfalls bevorzugter Ausführungsformen des erfindungsgemäßen Verfahrens können Elektrolysezellen mit beispielsweise poröse Elektroden aus Metallschüttungen oder mit beispielsweise porösen Elektroden aus Metallnetzen oder mit beispielsweise Elektroden sowohl aus Metallschüttungen als auch Metallnetzen eingesetzt werden.

Gemäß einer weiteren bevorzugten Ausführungsform werden im erfindungsgemäßen Verfahren Elektrolysezellen eingesetzt, die mindestens eine Opferanode mit einem runden scheibenförmigen Querschnitt und mindestens eine Kathode mit einem ringförmigen Querschnitt aufweisen, wobei besonders bevorzugt der Durchmesser der bevorzugt zylinderförmigen Anode kleiner ist als der innere Durchmesser der Kathode und die Anode derart in der Kathode angebracht ist, dass zwischen der Außenfläche des Zylindermantels der Anode und der Innenfläche der die Anode zumindest teilweise umgebenden Kathode ein Spalt homogener Dicke gebildet wird.

Im Rahmen der vorliegenden Erfindung ist es auch möglich, durch Umpolung die ursprüngliche Anode zur Kathode und die ursprüngliche Kathode zur Anode zu machen. Im Rahmen dieser Verfahrensvariante ist es beispielsweise möglich, bei entsprechender Wahl von Elektroden, die unterschiedliche Metalle enthalten, zuerst ein Metall über anodische Oxidation als Metallkation zum Aufbau des metallorganischen Gerüstmaterials zur Verfügung zu stellen und in einem zweiten Schritt nach Umpolung ein weiteres Metall zum Aufbau des metallorganischen Gerüstmaterials zur Verfügung zu stellen. Ebenso ist es möglich, die Umpolung über das Anlegen von Wechselstrom zu bewerkstelligen.

Grundsätzlich ist es möglich, das Verfahren in Batchfahrweise oder kontinuierlich oder im Mischbetrieb durchzuführen. Bevorzugt wird das Verfahren kontinuierlich in mindestens einer Durchflusszelle durchgeführt.

Die Spannungen, die im erfindungsgemäßen Verfahren angewendet werden, können an das jeweilige mindestens eine Metall der mindestens einen Anode angepasst werden, das als Metallionenquelle für das poröse metallorganische Gerüstmaterial dient, und/oder an die Eigenschaften der mindestens einen zweizähnigen organischen Verbindung und/oder gegebenenfalls an die Eigenschaften des untenstehend beschriebenen mindestens einen Lösungsmittels und/oder gegebenenfalls an die Eigenschaften des untenstehend beschriebenen mindestens einen Leitsalzes und/oder an die Eigenschaften der untenstehend beschriebenen mindestens einen kathodischen Depolarisationsverbindung angepasst werden.

Im Allgemeinen liegen die Spannungen pro Elektrodenpaar im Bereich von 0,5 bis 100 V, bevorzugt im Bereich von 2 bis 40 V und besonders bevorzugt im Bereich von 4 bis 20 V. Beispielsweise bevorzugte Bereiche sind etwa 4 bis 10 V oder 10 bis 20 V oder 20 bis 25 V oder 10 bis 25 V oder 4 bis 20 V oder 4 bis 25 V. Dabei kann die Spannung im Laufe des erfindungsgemäßen Verfahrens konstant sein oder sich im Verlauf des Verfahrens kontinuierlich oder diskontinuierlich ändern.

Beispielsweise im Fall, dass Kupfer anodisch oxidiert wird, liegen die Spannungen im Allgemeinen im Bereich von 3 bis 20 V, bevorzugt im Bereich von 3,5 bis 15 V und besonders bevorzugt im Bereich von 4 bis 15 V.

Die Stromdichten, die im Rahmen der erfindungsgemäßen Herstellung der porösen organischen Gerüstmaterialien auftreten, liegen im Allgemeinen im Bereich von 0,01 bis 1000 mA/cm², bevorzugt im Bereich von 0,1 bis 1000 mA/cm², weiter bevorzugt im Bereich von 0,2 bis 200 mA/cm², weiter bevorzugt im Bereich von 0,3 bis 100 mA/cm² und besonders bevorzugt im Bereich von 0,5 bis 50 mA/cm².

Die im erfindungsgemäßen Verfahren verwendeten Strommengen (Ah) liegen bevorzugt im Bereich von 30 bis 200 % derjenigen Strommenge, die nötig ist, um die Menge der bevorzugt eingesetzten Säureäquivalente der mindestens einen mindestens zweizähnigen Verbindung abzusättigen.

Das erfindungsgemäße Verfahren wird im Allgemeinen bei einer Temperatur im Bereich von 0 °C bis zum Siedepunkt, bevorzugt im Bereich von 20 °C bis zum Siedepunkt des jeweiligen Reaktionsmediums oder des verwendeten, mindestens einen Lösungsmittels bevorzugt unter Normaldruck durchgeführt. Ebenso ist es möglich, das Verfahren unter Druck durchzuführen, wobei Druck und Temperatur bevorzugt so gewählt werden, dass das Reaktionsmedium bevorzugt zumindest teilweise flüssig ist.

Im Allgemeinen wird das erfindungsgemäße Verfahren bei einem Druck im Bereich von 0,5 bis 50 bar, bevorzugt im Bereich von 1 bis 6 bar und insbesondere bevorzugt bei Normaldruck durchgeführt.

Je nach Art und Aggregatzustand der Bestandteile des Reaktionsmediums kann die erfindungsgemäße elektrochemische Herstellung des porösen metallorganischen Gerüstmaterials grundsätzlich auch ohne zusätzliches Lösungsmittel durchgeführt werden. Dies ist beispielsweise insbesondere dann der Fall, wenn mindestens eine der mindestens zweizähnigen Verbindungen im Reaktionsmedium als Lösungsmittel oder Lösungsmittelgemisch fungiert.

Ebenso ist es ohne Einsatz eines Lösungsmittels grundsätzlich möglich, das erfindungsgemäße Verfahren beispielsweise in der Schmelze durchzuführen, wobei mindestens ein Bestandteil des Reaktionsmediums in geschmolzenem Zustand vorliegt.

Gemäß einer bevorzugten Ausführungsform der vorliegenden Erfindung enthält das Reaktionsmedium mindestens ein geeignetes Lösungsmittel zusätzlich zu der mindestens einen mindestens zweizähnigen organischen Verbindung und gegebenenfalls zu dem mindestens einen Leitsalz und gegebenenfalls zu der mindestens einen kathodischen Depolarisationsverbindung. Dabei kann die chemische Natur und die Menge dieses mindestens einen Lösungsmittels an die mindestens eine mindestens zweizähnige organische Verbindung und/oder an das mindestens eine Leitsalz und/oder an die mindestens eine kathodische Depolarisationsverbindung und/oder an das mindestens eine Metallion angepasst werden.

Demgemäß beschreibt die vorliegende Erfindung auch ein wie oben beschriebenes Verfahren, das dadurch gekennzeichnet ist, dass das Reaktionsmedium zusätzlich zu der mindestens einen mindestens zweizähnigen organischen Verbindung zusätzlich mindestens ein Lösungsmittel enthält.

Als Lösungsmittel sind grundsätzlich alle Lösungsmittel oder alle Lösungsmittelgemische denkbar, in denen sich die im Verfahren eingesetzten Edukte unter den gewählten Reaktionsbedingungen wie Druck und Temperatur zumindest teilweise lösen oder suspendieren lassen. Beispielsweise bevorzugt eingesetzte Lösungsmittel sind unter anderem
- Wasser;
- Alkohole mit 1, 2, 3 oder 4 Kohlenstoffatomen wie Methanol, Ethanol, n-Propanol, iso-Propanol, n-Butanol, iso-Butanol, tert-Butanol;
- Carbonsäuren mit 1, 2, 3 oder 4 Kohlenstoffatomen wie Ameisensäure, Essigsäure, Propionsäure oder Butansäure;
- Nitrile wie beispielsweise Acetonitril oder Cyanobenzol;
- Ketone wie beispielsweise Aceton;
- Mindestens einfach halogensubstituierte niedere Alkane wie beispielsweise Methylenchlorid oder 1,2-Dichlorethan;
- Säureamide wie beispielswiese Amide von niederen Carbonsäuren wie beispielsweise Carbonsäuren mit 1, 2, 3 oder 4 Kohlenstoffatomen wie Amide der Ameisensäure, Essigsäure, Propionsäure oder Butansäure wie beispielsweise Formamid, Dimethylformamid (DMF), Diethylformamid (DEF), t-Butylformamid, Acetamid, Dimethylacetamid, Diethylacetamid oder t-Butyl-Acetamid;
- Cyclische Ether wie beispielsweise Tetrahydrofuran oder Dioxan;
- N-Formylamide oder N-Acetylamide oder symmetrische oder unsymmetrische Harnstoffderivate primärer, sekundärer oder cyclischer Amine wie beispielsweise Ethylamin, Diethylamin, Piperidin oder Morpholin;
- Amine wie beispielsweise Ethanolamin, Triethylamin oder Etyhlendiamin;
- Dimethylsulfoxid;
- Pyridin;
- Trialkylphosphite und Phosphate;
oder Gemische aus zwei oder mehr der vorgenannten Verbindungen.

Unter dem Begriff "Lösungsmittel", wie er obenstehend verwendet wird, fallen sowohl reine Lösungsmittel als auch Lösungsmittel, die in geringen Mengen mindestens eine weitere Verbindung wie beispielsweise bevorzugt Wasser enthalten. In diesem Fall liegen die Wassergehalte der oben genannten Lösungsmittel im Bereich von bis zu 1 Gew.-%, bevorzugt im Bereich von bis zu 0,5 Gew.-%, besonders bevorzugt im Bereich von 0,01 bis 0,5 Gew.-% und insbesondere bevorzugt im Bereich von 0,1 bis 0,5 Gew.-%. Unter dem Begriff "Methanol" oder "Ethanol" oder "Acetonitril" oder "DMF" oder "DEF" wird beispielsweise im Rahmen der vorliegenden Erfindung auch ein Lösungsmittel verstanden, das jeweils insbesondere bevorzugt Wasser im Bereich von 0,1 bis 0,5 Gew.-% enthalten kann.

Als bevorzugte Lösungsmittel werden im erfindungsgemäßen Verfahren Methanol, Ethanol, Acetonitril, DMF und DEF oder Gemisch aus zwei oder mehr dieser Verbindungen eingesetzt. Ganz besonders bevorzugt sind als Lösungsmittel Methanol, Ethanol DMF, DEF und Gemisch aus zwei oder mehr dieser Verbindungen.

Im Rahmen einer bevorzugten Ausführungsform wird als Lösungsmittel mindestens ein protisches Lösungsmittel eingesetzt. Dieses wird unter anderem dann bevorzugt eingesetzt, wenn zur Vermeidung der untenstehend beschriebenen Wiederabscheidung des durch anodische Oxidation bereitgestellten mindestens einen Metallioins an der Kathode die kathodische Bildung von Wasserstoff erreicht werden soll.

Beispielsweise im Fall, dass Methanol als Lösungsmittel eingesetzt wird, liegt die Temperatur im erfindungsgemäßen Verfahren unter Normaldruck im Allgemeinen im Bereich von 0 bis 90 °C; bevorzugt im Bereich von 0 bis 65 °C und insbesondere bevorzugt im Bereich von 25 bis 65 °C.

Beispielsweise im Fall, dass Ethanol als Lösungsmittel eingesetzt wird, liegt die Temperatur im erfindungsgemäßen Verfahren unter Normaldruck im Allgemeinen im Bereich von 0 bis 100 °C; bevorzugt im Bereich von 0 bis 78 °C und insbesondere bevorzugt im Bereich von 25 bis 78 °C.

Der pH-Wert des Reaktionsmediums wird im erfindungsgemäßen Verfahren so eingestellt, dass er für die Synthese oder die Stabilität oder bevorzugt für die Synthese und die Stabilität des Gerüstmaterials günstig ist. Beispielsweise kann der pH-Wert über das mindestens eine Leitsalz eingestellt werden.

Wird die Reaktion als Batch-Reaktion durchgeführt, liegt die Reaktionsdauer im Allgemeinen im Bereich von bis zu 30 h, bevorzugt im Bereich von bis zu 20 h. weiter bevorzugt im Bereich von 1 bis 10 h und insbesondere bevorzugt im Bereich von 1 bis 5 h.

Der Begriff "mindestens zweizähnige organische Verbindung", wie er im Rahmen der vorliegenden Erfindung verwendet wird, bezeichnet eine organische Verbindung, die mindestens eine funktionelle Gruppe enthält, die in der Lage ist, zu einem gegebenen Metallion mindestens zwei, bevorzugt zwei koordinative Bindungen, und/oder zu zwei oder mehr, bevorzugt zwei Metallatomen jeweils eine koordinative Bindung auszubilden.

Als funktionelle Gruppen, über die die genannten koordinativen Bindungen ausgebildet werden können, sind insbesondere beispielsweise folgende funktionellen Gruppen zu nennen: -CO₂H, -CS₂H, -NO₂, -B(OH)₂, -SO₃H, -Si(OH)₃, -Ge(OH)₃, -Sn(OH)₃, -Si(SH)₄, -Ge(SH)₄, -Sn(SH)₃, -PO₃H, -AsO₃H, -AsO₄H, -P(SH)₃, -As(SH)₃, -CH(RSH)₂, - C(RSH)₃, -CH(RNH₂)₂, -C(RNH₂)₃, -CH(ROH)₂, -C(ROH)₃, -CH(RCN)₂, -C(RCN)₃, wobei R beispielsweise bevorzugt eine Alkylengruppe mit 1, 2, 3, 4 oder 5 Kohlenstoffatomen wie beispielsweise eine Methylen-, Ethylen-, n-Propylen-, i-Propylen, n-Butylen-, i-Butylen-, tert-Butylen- oder n-Pentylengruppe, oder eine Arylgruppe, enthaltend 1 oder 2 aromatische Kerne wie beispielsweise 2 C₆-Ringe, die gegebenenfalls kondensiert sein können und unabhängig voneinander mit mindestens jeweils einem Substituenten geeignet substituiert sein können, und/oder die unabhängig voneinander jeweils mindestens ein Heteroatom wie beispielsweise N, O und/oder S enthalten können, bedeutet. Gemäß ebenfalls bevorzugter Ausführungsformen sind funktionelle Gruppen zu nennen, bei denen der oben genannte Rest R nicht vorhanden ist. Diesbezüglich sind unter anderem -CH(SH)₂, -C(SH)₃, -CH(NH₂)₂, -C(NH₂)₃, -CH(OH)₂, - C(OH)₃, -CH(CN)₂ oder -C(CN)₃ zu nennen.

Die mindestens zwei funktionellen Gruppen können grundsätzlich an jede geeignete organische Verbindung gebunden sein, solange gewährleistet ist, dass die diese funktionellen Gruppen aufweisende organische Verbindung zur Ausbildung der koordinativen Bindung und zur Herstellung des Gerüstmaterials befähigt ist.

Bevorzugt leiten sich die organischen Verbindungen, die die mindestens zwei funktionellen Gruppen enthalten, von einer gesättigten oder ungesättigten aliphatischen Verbindung oder einer aromatischen Verbindung oder einer sowohl aliphatischen als auch aromatischen Verbindung ab.

Die aliphatische Verbindung oder der aliphatische Teil der sowohl aliphatischen als auch aromatischen Verbindung kann linear und/oder verzweigt und/oder cyclisch sein, wobei auch mehrere Cyclen pro Verbindung möglich sind. Weiter bevorzugt enthält die aliphatische Verbindung oder der aliphatische Teil der sowohl aliphatischen als auch aromatischen Verbindung 1 bis 15, weiter bevorzugt 1 bis 14, weiter bevorzugt 1 bis 13, weiter bevorzugt 1 bis 12, weiter bevorzugt 1 bis 11 und insbesondere bevorzugt 1 bis 10 C-Atome wie beispielsweise 1, 2, 3, 4, 5, 6, 7, 8, 9 oder 10 C-Atome. Insbesondere bevorzugt sind hierbei unter anderem Methan, Adamantan, Acetylen, Ethylen oder Butadien.

Die aromatische Verbindung oder der aromatische Teil der sowohl aromatischen als auch aliphatischen Verbindung kann einen oder auch mehrere Kerne wie beispielsweise zwei, drei, vier oder fünf Kerne aufweisen, wobei die Kerne getrennt voneinander und/oder mindestens zwei Kerne in kondensierter Form vorliegen können. Besonders bevorzugt weist die aromatische Verbindung oder der aromatische Teil der sowohl aliphatischen als auch aromatischen Verbindung einen, zwei oder drei Kerne auf, wobei einer oder zwei Kerne besonders bevorzugt sind. Unabhängig voneinander kann weiter jeder Kern der genannten Verbindung mindestens ein Heteroatom wie beispielsweise N, O, S, B, P, Si, AI, bevorzugt N, O und/oder S enthalten. Weiter bevorzugt enthält die aromatische Verbindung oder der aromatische Teil der sowohl aromatischen als auch aliphatischen Verbindung einen oder zwei C₆-Kerne, wobei die zwei entweder getrennt voneinander oder in kondensierter Form vorliegen. Insbesondere sind als aromatische Verbindungen Benzol, Naphthalin und/oder Biphenyl und/oder Bipyridyl und/oder Pyridin zu nennen.

Beispielsweise sind unter anderem trans-Muconsäure oder Fumarsäure oder Phenylenbisacrylsäure zu nennen.

### Beispielsweise sind im Rahmen der vorliegenden Erfindung Dicarbonsäuren wie etwa

1,4-Butandicarbonsäure, 4-Oxo-Pyran-2,6-dicarbonsäure, 1,6-Hexandicarbonsäure, Decandicarbonsäure, 1,8-Heptadecandicarbonsäure, 1,9-Heptadecandicarbonsäure, Heptadecandicarbonsäure, Acetylendicarbonsäure, 1,2-Benzoldicarbonsäure, 2,3-Pyridindicarbonsäure, Pyridin-2,3-dicarbonsäure, 1,3-Butadien-1,4-dicarbonsäure, 1,4-Benzoldicarbonsäure, p-Benzoldicarbonsäure, Imidazol-2,4-dicarbonsäure, 2-Methyl-chinolin-3,4-dicarbonsäure, Chinolin-2,4-dicarbonsäure, Chinoxalin-2,3-dicarbonsäure, 6-Chlorchinoxalin-2,3-dicarbonsäure, 4,4'-Diaminphenylmethan-3,3'-dicarbonsäure, Chinolin-3,4-dicarbonsäure, 7-Chlor-4-hydroxychinolin-2,8-dicarbonsäure, Diimiddicarbonsäure, Pyridin-2,6-dicarbonsäure, 2-Methylimidazol-4,5-dicarbonsäure, Thiophen-3,4-dicarbonsäure, 2-lsopropylimidazol-4,5-dicarbonsäure, Tetrahydropyran-4,4-dicarbonsäure, Perylen-3,9-dicarbonsäure, Perylendicarbonsäure, Pluriol E 200-dicarbonsäure, 3,6-Dioxaoctandicarbonsäure, 3,5-Cyclohexadien-1,2-dicarbonsäure, Octandicarbonsäure, Pentan-3,3-carbonsäure, 4,4'-Diamino-1,1'-diphenyl-3,3'-dicarbon-säure, 4,4'-Diaminodiphenyl-3,3'-dicarbonsäure, Benzidin-3,3'-dicarbonsäure, 1,4-bis-(Phenylamino)-benzol-2,5-dicarbonsäure, 1,1'-Dinaphthyl-8,8'-dicarbonsäure, 7-Chlor-8-methylchinolin-2,3-dicarbonsäure, 1-Anilinoanthrachinon-2,4'-dicarbonsäure, Poly-tetrahydrofuran-250-dicarbonsäure, 1,4-bis-(Carboxymethyl)-piperazin-2,3-dicarbon-säure, 7-Chlorchinolin-3,8-dicarbonsäure, 1-(4-Carboxy)-phenyl-3-(4-chlor)-phenyl-py-razolin-4,5-dicarbonsäure, 1,4,5,6,7,7,-Hexachlor-5-norbornen-2,3-dicarbonsäure, Phe-nylindan-dicarbonsäure, 1,3-Dibenzyl-2-oxo-imidazolidin-4,5-dicarbonsäure, 1,4-Cyclo-hexandicarbonsäure, Naphthalin-1,8-dicarbonsäure, 2-Benzoylbenzol-1,3-dicarbon-säure, 1,3-Dibenzyl-2-oxo-imidazolidin-4,5-cis-dicarbonsäure, 2,2'-Bichinolin-4,4'-di-carbonsäure, Pyridin-3,4-dicarbonsäure, 3,6,9-Trioxaundecan-dicarbonsäure, o-Hydro-xy-benzophenon-dicarbonsäure, Pluriol E 300-dicarbonsäure, Pluriol E 400-di-carbonsäure, Pluriol E 600-dicarbonsäure, Pyrazol-3,4-dicarbonsäure, 2,3-Pyrazin-dicarbonsäure, 5,6-Dimethyl-2,3-pyrazin-dicarbonsäure, 4,4'-Diaminodiphenylether-di-imiddicarbonsäure, 4,4'-Diaminodiphenylmethandiimiddicarbonsäure, 4,4'-Diamino-diphenylsulfon-diimiddicarbonsäure, 2,6-Naphthalindicarbonsäure, 1,3-Adaman-tandicarbonsäure, 1,8-Naphthalindicarbonsäure, 2,3-Naphthalindicarbonsäure, 8-Methoxy-2,3-naphthalindicarbonsäure, 8-Nitro-2,3-naphthalindicarbonsäure, 8-Sulfo-2,3-naphthalindicarbonsäure, Anthracen-2,3-dicarbonsäure, 2',3'-Diphenyl-p-terphenyl-4,4"-dicarbonsäure, Diphenylether-4,4'-dicarbonsäure, Imidazol-4,5-dicarbonsäure, 4(1H)-Oxo-thiochromen-2,8-dicarbonsäure, 5-tert-Butyl -1,3-benzoldicarbonsäure, 7,8-Chinolindicarbonsäure, 4,5-Imidazoldicarbonsäure, 4-Cyclohexen-1,2-dicarbonsäure, Hexatriacontandicarbonsäure, Tetradecandicarbonsäure, 1,7-Heptandicarbonsäure, 5-Hydroxy-1,3-Benzoldicarbonsäure, Pyrazin-2,3-dicarbonsäure, Furan-2,5-dicarbonsäure, 1-Nonen-6,9-dicarbonsäure, Eicosendicarbonsäure, 4,4'-Dihydroxy-diphenylmethan-3,3'-dicarbonsäure, 1-Amino-4-methyl-9,10-dioxo-9,10-dihydroanthracen-2,3-dicarbonsäure, 2,5-Pyridindicarbonsäure, Cyclohexen-2,3-dicarbonsäure,2,9-Di-chlorfluorubin-4,11-dicarbonsäure, 7-Chlor-3-methylchinolin -6,8-dicarbonsäure, 2,4-Dichlorbenzophenon-2',5'-dicarbonsäure, 1,3-benzoldicarbonsäure, 2,6-Pyridindicarbonsäure, 1-Methylpyrrol-3,4-dicarbonsäure, 1-Benzyl-1H-pyrrol-3,4-dicarbonsäure, Anthrachinon-1,5-dicarbonsäure, 3,5-Pyrazoldicarbonsäure, 2-Nitrobenzol-1,4-dicarbonsäure, Heptan-1,7-dicarbonsäure, Cyclobutan-1,1-dicarbonsäure 1,14-Tetradecandicarbonsäure, 5,6-Dehydronorbornan-2,3-dicarbonsäure oder 5-Ethyl-2,3-Pyridindicarbonsäure,

### Tricarbonsäuren wie etwa

2-Hydroxy-1,2,3-propantricarbonsäure, 7-Chlor-2,3,8-chinolintricarbonsäure, 1,2,4-Benzoltricarbonsäure, 1,2,4-Butantricarbonsäure, 2-Phosphono-1,2,4-butantricarbonsäure, 1,3,5-Benzoltricarbonsäure, 1-Hydroxy-1,2,3-Propantricarbonsäure, 4,5-Di-hydro-4,5-dioxo-1H-pyrrolo[2,3-F]chinolin-2,7,9-tricarbonsäure, 5-Acetyl-3-amino-6-methylbenzol-1,2,4-tricarbonsäure, 3-Amino-5-benzoyl-6-methylbenzol-1,2,4-tricarbonsäure, 1,2,3-Propantricarbonsäure oder Aurintricarbonsäure,

### oder Tetracarbonsäuren wie etwa

1,1-Dioxid-perylo[1,12-BCD]thiophen-3,4,9,10-tetracarbonsäure, Perylentetracarbonsäuren wie Perylen-3,4,9,10-tetracarbonsäure oder oder Perylen-1,12-sulfon-3,4,9,10-tetracarbonsäure, Butantetracarbonsäuren wie 1,2,3,4-Butantetracarbonsäure oder Meso-1,2,3,4-Butantetracarbonsäure, Decan-2,4,6,8-tetracarbonsäure, 1,4,7,10,13,16-Hexaoxacyclooctadecan-2,3,11,12-tetracarbonsäure, 1,2,4,5-Benzoltetracarbonsäure, 1,2,11,12-Dodecantetracarbonsäure, 1,2,5,6-Hexan-tetracarbonsäure, 1,2,7,8-Octantetracarbonsäure, 1,4,5,8-Naphthalintetracarbonsäure, 1,2,9,10-Decantetracarbonsäure, Benzophenontetracarbonsäure, 3,3',4,4'-Benzo-phenontetracarbonsäure, Tetrahydrofurantetracarbonsäure oder Cyclopentantetracarbonsäuren wie Cyclopentan-1,2,3,4-tetracarbonsäure

### zu nennen.

Ganz besonders bevorzugt werden im Rahmen des erfindungsgemäßen Verfahren gegebenenfalls geeignet mindestens einfach substituierte mono-, di-, tri-, tetra- oder höherkernige aromatische Di-, Tri- oder Tetracarbonsäuren eingesetzt, wobei jeder der Kerne mindestens ein Heteroatom enthalten kann, wobei zwei oder mehr Kerne gleiche oder unterschiedliche Heteroatome enthalten kann. Beispielsweise bevorzugt werden monokernige Dicarbonsäuren, monokernige Tricarbonsäuren, monokernige Tetracarbonsäuren, dikernige Dicarbonsäuren, dikernige Tricarbonsäuren, dikernige Tetracarbonsäuren, trikernige Dicarbonsäuren, trikernige Tricarbonsäuren, trikernige Tetracarbonsäuren, tetrakernige Dicarbonsäuren, tetrakernige Tricarbonsäuren und/oder tetrakernige Tetracarbonsäuren. Geeignete Heteroatome sind beispielsweise N, O, S, B, P, Si, Al, bevorzugte Heteroatome sind hierbei N, S und/oder O. Als geeigneter Substituent ist diesbezüglich unter anderem -OH, eine Nitrogruppe, eine Aminogruppe oder eine Alkyl- oder Alkoxygruppe zu nennen.

Demgemäß betrifft die vorliegende Erfindung auch ein wie oben beschriebenes Verfahren, das dadurch gekennzeichnet ist, dass als mindestens zweizähnige organische Verbindung eine aromatische Di- Tri- und/oder Tetracarbonsäure eingesetzt wird.

Insbesondere bevorzugt werden im erfindungsgemäßen Verfahren als mindestens zweizähnige organische Verbindungen Acetylendicarbonsäure (ADC), Benzoldicarbonsäuren, Naphthalindicarbonsäuren, Biphenyldicarbonsäuren wie beispielsweise 4,4'-Biphenyldicarbonsäure (BPDC), Bipyridindicarbonsäuren wie beispielsweise 2,2'-Bipyridindicarbonsäuren wie beispielsweise 2,2'-Bipyridin-5,5'-dicarbonsäure, Benzoltricarbonsäuren wie beispielsweise 1,2,3-Benzoltricarbonsäure oder 1,3,5-Benzoltricarbonsäure (BTC), Adamantantetracarbonsäure (ATC), Adamantandibenzoat (ADB) Benzoltribenzoat (BTB), Methantetrabenzoat (MTB), Adamantantetrabenzoat oder Dihydroxyterephthalsäuren wie beispielsweise 2,5-Dihydroxyterephthalsäure (DHBDC) eingesetzt.

Ganz besonders bevorzugt werden im Rahmen der vorliegenden Erfindung unter anderem Terephthalsäure, 2,5-Dihydroxyterephthalsäure, 1,2,3-Benzoltricarbonsäure, 1,3,5-Benzoltricarbonsäure oder 2,2'-Bipyridin-5,5'-dicarbonsäure eingesetzt.

Gemäß einer beispielsweise bevorzugten Ausführungsform wird als mindestens zweizähnige organische Verbindung 1,3,5-Benzoltricarbonsäure eingesetzt. Im Falle, dass mindestens ein Lösungsmittel eingesetzt wird, werden beispielsweise bevorzugt als Lösungsmittel Methanol oder Ethanol oder Methanol und Ethanol eingesetzt. Besonders bevorzugt ist Ethanol.

Gemäß einer weiteren, beispielsweise bevorzugten Ausführungsform wird als mindestens zweizähnige organische Verbindung 1,2,3-Benzoltricarbonsäure eingesetzt. Im Falle, dass mindestens ein Lösungsmittel eingesetzt wird, werden beispielsweise bevorzugt als Lösungsmittel Methanol oder Ethanol oder Methanol und Ethanol eingesetzt. Besonders bevorzugt ist Methanol.

Gemäß einer weiteren, beispielsweise bevorzugten Ausführungsform wird als mindestens zweizähnige organische Verbindung Terephthalsäure eingesetzt. Im Falle, dass mindestens ein Lösungsmittel eingesetzt wird, werden beispielsweise bevorzugt als Lösungsmittel Dimethylformamid oder Diethylformamid oder Dimethylformamid und Diethylformamid eingesetzt. Besonders bevorzugt ist Diethylformamid.

Gemäß einer weiteren, beispielsweise bevorzugten Ausführungsform wird als mindestens zweizähnige organische Verbindung Dihydroxyterephthalsäure eingesetzt. Im Falle, dass mindestens ein Lösungsmittel eingesetzt wird, werden beispielsweise bevorzugt als Lösungsmittel Dimethylformamid oder Diethylformamid oder Dimethylformamid und Diethylformamid eingesetzt. Besonders bevorzugt ist Diethylformamid.

Gemäß einer weiteren, beispielsweise bevorzugten Ausführungsform wird als mindestens zweizähnige organische Verbindung Naphthalin-2,6-Dicarbonsäure eingesetzt. Im Falle, dass mindestens ein Lösungsmittel eingesetzt wird, werden beispielsweise bevorzugt als Lösungsmittel Methanol oder Ethanol oder Methanol und Ethanol eingesetzt. Besonders bevorzugt ist Methanol.

Die mindestens eine mindestens zweizähnige Verbindung wird in einer Konzentration eingesetzt, die im Allgemeinen im Bereich von 0,1 bis 30 Gew.-%, bevorzugt im Bereich von 0,5 bis 20 Gew.-% und besonders bevorzugt im Bereich von 2 bis 10 Gew.-%, jeweils bezogen auf das Gesamtgewicht des Reaktionssystems abzüglich des Gewichts der Anode und der Kathode. Demgemäß umfasst der Begriff "Konzentration" in diesem Fall sowohl die im Reaktionssystem gelöste als auch beispielsweise die im Reaktionssystem gegebenenfalls suspendierte Menge der mindestens einen mindestens zweizähnigen Verbindung.

Gemäß einer bevorzugten Ausführungsform des erfindungsgemäßen Verfahrens wird die mindestens eine mindestens zweizähnige Verbindung in Abhängigkeit des Fortgangs der Elektrolyse und insbesondere in Abhängigkeit von der Zersetzung der Anode beziehungsweise Freisetzung des mindestens einen Metallions und/oder in Abhängigkeit der Bildung des metallorganischen Gerüstmaterials kontinuierlich und/oder diskontinuierlich zugesetzt.

Folgende Kombinationen aus Metall, aus dem durch anodische Oxidation das mindestens eine Metallkation bereitgestellt wird, mindestens zweizähniger Verbindung und Lösungsmittel sind im Rahmen der vorliegenden Erfindung beispielsweise bevorzugt:
Zn/BDC/DEF; Zn/DHBDC/DEF; Zn/H₂BDC/DMF; Zn/BDC/DMF,MeOH; Zn/H₂BDC/DMF; Zn/4,4'-BP-2,2'-DC/DEF; Zn/2,6-NDC/DEF; Zn/H₃BTB/H₂O,DMF,EtOH; Zn/H₂BDC/DMSO; Zn/1,4-NDC/DMF; Zn/H₃BTB/DMF,EtOH; Zn/H₂BDC/DMF,AN; Zn/H₂BDC/DMSO; Zn/H₂BDC/DMSO,MeOH; Zn/H₂BDC/DMSO,n-Propanol; Zn/H₂BDC/NMP; Zn/m-BDC/DMF,AN; Zn/1,4-NDC/DMF,EtOH; Zn/H₂N-BDC/DEF,EtOH; Zn/1,4-NDC/DEF; Zn/2,6-NDC/DEF; Zn/PDC/DEF;
Cu/BDC/DEF; Cu/1,3,5-BTC/EtOH; Cu/1,2,3-BTC/MeOH; Cu/H₃BTB/H₂O,DMF,EtOH; Cu/H₂BDC(OH)₂/DMF; Cu/Thiophendicarbonsäure/DEF; Cu/Thiophendicarbonsäure/DMF; Cu/Thiophendicarbonsäure/MeOH; Cu/Malonsäure/DMF; Cu/Glutarsäure/DMF; Cu/Weinsäure/DMF;
Fe/H₂BDC/DMF; Fe/H₃BDC/DMF; Fe/BTC/DMF; Fe/BDC/DMF,EtOH; Fe/BPDC/DMF,n-Propanol; Fe/m-BDC/Pyridin; Fe/m-BDC/DMF,Pyridin;
Co/BDC/MeOH; Co/H₂BDC/NMP; Co/H₂BDC/DMF
Mg/BDC/DEF; Mg/BDC(OH)₂/DMF;
Pb/H₂BDC/DMF,EtOH;

Dabei gelten folgende Abkürzungen:
- BDC: Benzoldicarbonsäure
- m-BDC: m-Benzoldicarbonsäure
- H₂BDC: Dihydroterephthalsäure
- H₂N-BDC: Aminoterephthalsäure
- 4,4'-BP-2,2'-DC: 4,4'-Biphenyl-2,2'-dicarbonsäure
- 4,4'-BPDC: 4,4'-Biphenyldicarbonsäure
- H₃BTB: Benzoltribenzoat
- 1,3,5-BTC: 1,3,5-Benzoltricarbonsäure
- 1,2,3-BTC: 1,2,3- Benzoltricarbonsäure
- DHBDC: 2,5-Dihydroxyterephthalsäure
- 2,6-NDC: 2,6-Naphthalindicarbonsäure
- 1,4-NDC: 1,4-Naphthalindicarbonsäure
- PDC: Pyrendicarbonsäure

Gemäß einer insbesondere bevorzugten Ausführungsform des erfindungsgemäßen Verfahrens enthält das Reaktionsmedium mindestens ein geeignetes Leitsalz. In Abhängigkeit von der eingesetzten mindestens einen mindestens zweizähnigen Verbindung und/oder dem gegebenenfalls eingesetzten Lösungsmittel ist es im erfindungsgemäßen Verfahren auch möglich, die Herstellung des metallorganischen Gerüstmaterials ohne zusätzliches Leitsalz durchzuführen.

Hinsichtlich der im erfindungsgemäßen Verfahren einsetzbaren Leitsalze existieren im Wesentlichen keine Beschränkungen. Bevorzugt werden beispielsweise Salze von Mineralsäuren, Sulfonsäuren, Phosphonsäuren, Boronsäuren, Alkoxysulfonsäuren oder Carbonsäuren oder von anderen aciden Verbindungen wie beispielsweise Sulfonsäureamiden oder Imiden eingesetzt.

Mögliche anionische Komponenten des mindestens einen Leitsalzes sind demgemäß unter anderem Sulfat, Nitrat, Nitrit, Sulfit, Disulfit, Phosphat, Hydrogenphosphat, Dihydrogenphosphat, Diphosphat, Triphosphat, Phosphit, Chlorid, Chlorat, Bromid, Bromat, lodid, lodat, Carbonat oder Hydrogencarbonat.

Als Kationenkomponente der erfindungsgemäß einsetzbaren Leitsalze sind unter anderem Alkalimetallionen wie etwa Li⁺, Na⁺, K⁺ oder Rb⁺, Erdalkalimetallionen wie etwa Mg²⁺, Ca²⁺, Sr²⁺ oder Ba²⁺, Ammoniumionen oder Phosphoniumionen zu nennen.

Bezüglich der Ammoniumionen sind quaternäre Ammoniumionen und protonierte Mono-, Di- und Triamine zu nennen.

Beispiele für erfindungsgemäß bevorzugt eingesetzte quaternäre Ammoniumionen sind unter anderem
- symmetrische Ammoniumionen wie etwa Tetraalkylammonium mit bevorzugt C₁-C₄-Alkyl, beispielsweise Methyl, Ethyl, n-Propyl, iso-Propyl, n-Butyl, iso-Butyl. tert-Butyl, wie Tetramethylammonium, Tetraethylammonium, Tetrapropylammonium, Tetrabutylammonium oder
- unsymmetrische Ammoniumionen wie etwa unsymmetrische Tetraalkylammonium mit bevorzugt C₁-C₄-Alkyl, beispielsweise Methyl, Ethyl, n-Propyl, iso-Propyl, n-Butyl, iso-Butyl. tert-Butyl, wie beispielsweise Methyltributylammonium oder
- Ammoniumionen mit mindestens einem Aryl wie beispielsweise Phenyl oder Naphthyl oder mindestes einem Alkaryl wie beispielsweise Benzyl oder mindestens einem Aralkyl und mindestens einem Alkyl, bevorzugt C₁-C₄-Alkyl, beispielsweise Methyl, Ethyl, n-Propyl, iso-Propyl, n-Butyl, iso-Butyl, tert-Butyl, wie etwa Aryltrialkyl wie etwa Benzyltrimethylammonium oder Benzyltriethylammonium.

Gemäß einer besonders bevorzugten Ausführungsform wird im erfindungsgemäßen Verfahren mindestens ein Leitsalz eingesetzt, das als mindestens eine kationische Komponente ein Methyltributylammoniumion enthält.

Gemäß einer besonders bevorzugten Ausführungsform wird im erfindungsgemäßen Verfahren als Leitsalz Methyltributylammoniummethylsulfat eingesetzt.

Als Leitsalze sind im erfindungsgemäßen Verfahren auch ionische Flüssigkeiten wie beispielsweise Methyl-ethyl-imidazoliumchlorid oder Methyl-butyl-imidazoliumchlorid einsetzbar.

Gemäß einer ebenfalls bevorzugten Ausführungsform wird im erfindungsgemäßen Verfahren als Leitsalz Metansulfonat eingesetzt.

Als Kationenkomponente des mindestens einen Leitsalzes sind erfindungsgemäß auch protonierte oder quaternäre Heterocyclen wie beispielsweise das Imidazoliumion zu nennen.

Im Rahmen einer unter anderem bevorzugten Ausführungsform des erfindungsgemäßen Verfahrens ist es möglich, über die kationische und/oder anionische Komponente des mindestens einen Leitsalzes Verbindungen in das Reaktionsmedium einzubringen, die für den Aufbau des metallorganischen Gerüstmaterials eingesetzt werden. Diese Verbindungen sind solche, die die Ausbildung der Struktur des metallorganischen gerüstmaterials beeinflussen, im resultierenden Gerüstmaterial jedoch nicht enthalten sind, und auch solche, die im resultierenden Gerüstmaterial enthalten sind. Insbesondere kann im erfindungsgemäßen Verfahren mindestens eine Verbindung über mindestens ein Leitsalz eingebracht werden, die im resultierenden metallorganischen Gerüstmaterial enthalten ist.

Beispielsweise bevorzugt wird diesbezüglich unter anderem Tetraalkylammoniumcarboxylat wie etwa eine Monotetraalkylammoniumsalz der 1,3,5-Benzoltricarbonsäure. Im Rahmen dieser Ausführungsform ist es unter anderem bevorzugt, 1,3,5-Benzoltricarbonsäure zusammen mit Tetraalkylammoniumhydroxid in Methanol als Lösungsmittel einzusetzen. Diese Verfahrensführung biete unter anderem den Vorteil, dass Tetraalkylammoniumhydroxid in der Regel als wässrige Lösung eingesetzt wird und somit Wasser automatisch zum essentiellen Bestandteil des Reaktionsmediums wird.

Demgemäß beschreibt die vorliegende Erfindung auch ein wie oben beschriebenes Verfahren, das dadurch gekennzeichnet ist, dass mindestens eine zum Aufbau des metallorganischen Gerüstmaterials benötigte Verbindung, bevorzugt mindestens eine im herzustellenden metallorganischen Gerüstmaterial enthaltene Verbindung zumindest teilweise über mindestens ein Leitsalz in das Reaktionssystem eingebracht wird.

Im Rahmen einer Ausführungsform des erfindungsgemäßen Verfahrens ist es somit möglich, zusätzlich zu der mindestens einen Anode als Metallionenquelle das Metallion über die kationische Komponente des mindestens einen Leitsalzes in das Reaktionsmedium einzubringen. Ebenso ist es möglich, über die kationische Komponente des mindestens einen Leitsalzes mindestens ein Metallion in das Reaktionsmedium einzubringen, das von dem mindestens einen über anodische Oxidation eingebrachte Metallion verschieden ist, wobei sich diese Verschiedenheit auf die Wertigkeit des Kations und/oder die Art des Metalls beziehen kann.

Ebenso ist es im Rahmen des erfindungsgemäßen Verfahrens möglich, Salze als Leitsalze einzusetzen, deren Anionenkomponente oder Anionenkomponenten eine Verbindung darstellt, die für den Aufbau des metallorganischen Gerüstmaterials eingesetzt wird. Insbesondere können daher Leitsalze eingesetzt werden, deren Anionenkomponente beispielsweise das Monocarboxylat oder Dicarboxylat oder Tricarboxylat oder Tetracarboxylat oder Monosulfonat oder Disulfonat oder Trisulfonat oder Tetrasulfonat, bevorzugt ein Dicarboxylat oder Tricarboxylat oder Tetracarboxylat und weiter bevorzugt das Dicarboxylat oder Tricarboxylat oder Tetracarboxylat der bevorzugt eingesetzten aromatischen Di-, Tri- oder Tetracarbonsäure darstellen.

Demgemäß beschreibt die vorliegende Erfindung auch ein wie oben beschriebenes Verfahren, das dadurch gekennzeichnet ist, dass das mindestens eine Leitsalz ein Salz der mindestens einen mindestens zweizähnigen Verbindung enthält.

Weiter beschreibt die vorliegende Erfindung auch das wie oben beschriebenes Verfahren, das dadurch gekennzeichnet ist, dass das mindestens eine Leitsalz als Kationenkomponente ein quaternäres Ammoniumion und als Anionenkomponente ein Carboxylat der mindestens einen mindestens zweizähnigen Verbindung enthält.

Die Konzentration des mindestens einen Leitsalzes liegt im Rahmen des erfindungsgemäßen Verfahrens im Allgemeinen im Bereich von 0,01 bis 10 Gew.-%, bevorzugt im Bereich von 0,05 bis 5 Gew.-% und insbesondere bevorzugt im Bereich von 0,1 bis 3 Gew.-%, jeweils bezogen auf die Summe der Gewichte sämtlicher im Reaktionssystem vorhandener Leitsalze und weiter bezogen auf das Gesamtgewicht des Reaktionssystems ohne Berücksichtigung der Anoden und Kathoden.

Ein wichtiger Vorteil des vorliegenden erfindungsgemäßen Verfahrens ist somit darin zu sehen, dass keines der oben genannten kritischen Anionen wie Halogenide oder Nitrat, die im herkömmlichen Verfahren über das mindestens eine Metallsalz in das Reaktionsmedium eingebracht werden, in stöchiometrischen Mengen, sondern, falls überhaupt, über das mindestens eine Leitsalz vielmehr in unterstöchiometrischen Mengen, d.h. im Wesentlichen in katalytischen Mengen eingebracht wird.

Wird das Verfahren in Batch-Fahrweise durchgeführt, so wird im Allgemeinen zuerst das Reaktionsmedium mit den Edukten bereitgestellt, anschließend Strom angelegt und dann umgepumpt.

Wird das Verfahren kontinuierlich durchgeführt, so wird im Allgemeinen aus dem Reaktionsmedium ein Teilstrom ausgeschleust, das darin enthaltene kristalline poröse metallorganische Gerüstmaterial isoliert und die Mutterlauge zurückgefahren.

Ein weiterer Vorteil, den das erfindungsgemäße Verfahren gegenüber den aus dem Stand der Technik bekannten Verfahren, die bei der Herstellung der porösen metallorganischen Gerüstmaterialien von Metallsalzen ausgehen, bietet, ist die Tatsache, dass erfindungsgemäß pro Syntheseansatz ein höherer Feststoffgehalt im Reaktionsmedium erzielt werden kann, da der Feststoffgehalt nicht durch die Menge des eingesetzten Eduktsalzes begrenzt ist. Dies rührt daher, dass das Metallkation über die Anode in beliebigen Mengen nachgeführt werden kann.

Der Begriff "Feststoffgehalt", wie im Rahmen der vorliegenden Erfindung verwendet wird, bezeichnet die Menge an abgetrenntem Feststoff nach der Reaktion, bezogen auf die Gesamtmenge des Reaktionsansatzes.

Im Gegensatz zum Herstellungsverfahren gemäß Stand der Technik, bei der nicht nur der Ligand, sondern auch das Metallsalz zu lösen ist, steht im Rahmen des erfindungsgemäßen Verfahrens das mindestes eine Lösungsmittel vollständig zur Lösung und/oder Suspension, bevorzugt zur Lösung des Liganden bereit.

Dies gilt insbesondere in einer kontinuierlichen Variante des erfindungsgemäßen Verfahrens, bei der die Anode in dem Maße, wie sie durch anodische Oxidation abgetragen wird, nachgeführt wird. Dies wird, wie oben beschrieben, beispielsweise im Rahmen einer Pencil-Sharpener-Zelle durchgeführt. Analog zur Nachführung der Anode wird die mindestens eine mindestens zweizähnige Verbindung nachdosiert. Dabei kann dann die entstehende Suspension, enthaltend das metallorganische Gerüstmaterial, kontinuierlich ausgetragen werden.

Durch diese experimentell in einfacher Weise durchzuführende Nachführung des Metallkations über die Nachführung der Anode wird die Wirtschaftlichkeit des Verfahrens zur Herstellung der porösen metallorganischen Gerüstmaterialien erheblich gesteigert.

Im Allgemeinen liegt der Feststoffgehalt bei mindestens 0,5 Gew.-%, besonders bevorzugt im Bereich von 0,5 bis 50 Gew.-%.

Demgemäß betrifft die vorliegende Erfindung auch ein wie oben beschriebenes Verfahren, das dadurch gekennzeichnet ist, dass der Feststoffgehalt im Bereich von 0,5 bis 50 Gew.-% liegt.

Gemäß einer insbesondere bevorzugten Ausführungsform wird das erfindungsgemäße Verfahren so durchgeführt, dass die Wiederabscheidung des durch anodische Oxidation freigesetzten Metallions an der Kathode verhindert wird.

Diese Wiederabscheidung wird erfindungsgemäß beispielsweise bevorzugt dadurch verhindert, dass eine Kathode eingesetzt wird, die in einem gegebenen Reaktionsmedium eine geeignete Wasserstoffüberspannung aufweist. Solche Kathoden sind beispielsweise die bereits oben genannten Graphit-, Kupfer-, Zink-, Zinn-, Mangan-, Silber-, Gold-, Platin-Kathoden oder Kathoden, die Legierungen wie etwa Stähle, Bronzen oder Messing enthalten.

Die Wiederabscheidung wird erfindungsgemäß beispielsweise bevorzugt weiter dadurch verhindert, dass im Reaktionsmedium ein Elektrolyt eingesetzt wird, der die kathodische Bildung von Wasserstoff begünstigt. Diesbezüglich ist unter anderem ein Elektrolyt bevorzugt, der mindestens ein protisches Lösungsmittel enthält. Bevorzugte Beispiele für solche Lösungsmittel sind obenstehend aufgeführt. Besonders bevorzugt sind hierbei Alkohole, insbesondere bevorzugt Methanol und Ethanol.

Die Wiederabscheidung wird erfindungsgemäß beispielsweise bevorzugt weiter dadurch verhindert, dass im Reaktionsmedium mindestens eine Verbindung enthalten ist, die zu einer kathodischen Depolarisation führt. Unter einer Verbindung, die zu einer kathodischen Depolarisation führt, wird im Rahmen der vorliegenden Erfindung jede Verbindung verstanden, die unter gegebenen Reaktionsbedigungen an der Kathode reduziert wird.

Als kathodische Depolarisatoren sind unter anderem Verbindungen bevorzugt, die an der Kathode hydrodimerisiert werden. Beispielsweise besonders bevorzugt sind in diesem Zusammenhang Acrylnitril, Acrylsäureester und Maleinsäureester wie beispielsweise weiter bevorzugt Maleinsäuredimethylester.

Als kathodische Depolarisatoren sind weiter unter anderem Verbindungen bevorzugt, die mindestens eine Carbonylgruppe enthalten, die an der Kathode reduziert wird. Beispiele für solche Carbonylgruppen enthaltenden Verbindungen sind etwa Ester wie beispielsweise Phthalsäuredialkylester und Ketone wie beispielsweise Aceton.

Als kathodische Depolarisatoren sind unter anderem Verbindungen bevorzugt, die mindestens eine Stickstoff-Sauerstoff-Bindung, eine Stickstoff-Stickstoff-Bindung und/oder eine Stickstoff-Kohlenstoff-Bindung aufweisen, die an der Kathode reduziert werden. Beispiele für solche Verbindungen sind etwa Verbindungen mit einer Nitrogruppe, mit einer Azogruppe, mit einer Azoxygruppe, Oxime, Pyridine, Imine, Nitrile und/oder Cyanate.

Im Rahmen des erfindungsgemäßen Verfahrens ist es weiter möglich, mindestens zwei der genannten Maßnahmen zur Verhinderung der kathodischen Wiederabscheidung zu kombinieren. Beispielsweise ist es möglich, sowohl einen Elektrolyten einzusetzen, der die kathodische Bildung von Wasserstoff begünstigt als auch eine Elektrode mit einer geeigneten Wasserstoffüberspannung einzusetzen. Ebenso ist es möglich, sowohl einen Elektrolyten einzusetzen, der die kathodische Bildung von Wasserstoff begünstigt als auch mindestens eine Verbindung zuzusetzen, die zu einer kathodischen Depolarisation führt. Ebenso ist es möglich, sowohl mindestens eine Verbindung zuzusetzen, die zu einer kathodischen Depolarisation führt, als auch eine Kathode mit einer geeigneten Wasserstoffüberspannung einzusetzen. Weiter ist es möglich, sowohl einen Elektrolyten einzusetzen, der die kathodische Bildung von Wasserstoff begünstigt, als auch eine Elektrode mit einer geeigneten Wasserstoffüberspannung einzusetzen als auch mindestens eine Verbindung zuzusetzen, die zu einer kathodischen Depolarisation führt.

Demgemäß betrifft die vorliegende Erfindung auch ein wie oben beschriebenes Verfahren, das dadurch gekennzeichnet ist, dass die kathodische Wiederabscheidung des mindestens einen Metallions durch mindestens eine der folgenden Massnahmen zumindest teilweise verhindert wird:
(i) Verwendung eines Elektrolyten, der die kathodische Bildung von Wasserstoff begünstigt;
(ii) Zusatz mindestens einer Verbindung, die zu einer kathodischen Depolarisation führt;
(iii) Einsatz einer Kathode mit einer geeigneten Wasserstoffüberspannung.

Ebenso betrifft die vorliegende Erfindung daher auch ein wie oben beschriebenes Verfahren, das dadurch gekennzeichnet ist, dass der Elektrolyt gemäß (i) mindestens ein protisches Lösungsmittel, insbesondere einen Alkohol, weiter bevorzugt Methanol und/oder Ethanol enthält.

Ebenso betrifft die vorliegende Erfindung daher auch ein wie oben beschriebenes Verfahren, das dadurch gekennzeichnet ist, dass die kathodische Depolarisation eine Hydrodimerisierung, insbesondere eine Hydrodimerisierung eines Maleinsäurediesters, weiter bevorzugt von Maleinsäuredimethylester ist.

Insbesondere bevorzugt beschreibt die vorliegende Erfindung ein wie oben beschriebenes Verfahrens, das dadurch gekennzeichnet ist, dass zur Verhinderung der Wiederabscheidung sowohl mindestens ein protisches Lösungsmittel, bevorzugt ein Alkohol, weiter bevorzugt Methanol oder Ethanol oder ein Gemisch aus Methanol und Ethanol, als auch mindestens eine, kathodisch zur Hydrodimerisierung befähigte Verbindung, bevorzugt ein Maleinsäurediester und weiter bevorzugt ein Maleinsäuredimethylester, eingesetzt werden.

Gemäß einer insbesondere bevorzugten Ausführungsform wird das erfindungsgemäße Verfahren in Kreisfahrweise betrieben. Unter diesem "Elektrolysekreis" wird im Rahmen der vorliegenden Erfindung jede Verfahrensführung verstanden, bei der zumindest ein Teil des sich in der Elektrolysezelle befindlichen Reaktionssystem aus der Elektrolysezelle ausgeschleust, gegebenenfalls mindestens einem Zwischenbehandlunsgsschritt wie beispielsweise mindestens einer Temperaturbehandlung oder Zusatz und/oder Abtrennung mindestens einer Komponenten des ausgeschleusten Stroms unterworfen und in die Elektrolysezelle zurückgeführt wird. Besonders bevorzugt wird ein solcher Elektrolysekreis im Rahmen der vorliegenden Erfindung in Kombination mit einer Plattenstapelzelle, einer Rohrzelle oder einer Pencil-Sharpener-Zelle durchgeführt.

Nach erfolgter Herstellung liegt das im Allgemeinen kristalline Gerüstmaterial in Form der Primärkristalle in der Mutterlauge vor.

Nach erfolgter Herstellung des metall-organischen Gerüstmaterials wird der Gerüstmaterial-Feststoff von seiner Mutterlauge abgetrennt. Dieser Abtrennvorgang kann grundsätzlich gemäß sämtlicher geeigneter Verfahren erfolgen. Bevorzugt wird der Gerüstmaterialfeststoff durch Fest-Flüssig-Trennung, Zentrifugation, Extraktion, Filtration, Membranfiltration, Crossflow-Filtration, Diafiltration, Ultrafiltration, Flokkulation unter Verwendung von Flokkulationshilfsmitteln wie beispielsweise nicht-ionische, kationische und/oder anionische Hilfsmittel), pH-Shift durch Zusatz von Additiven wie beispielsweise Salzen, Säuren oder Basen, Flotation, Sprühtrocknung, Sprühgranulation, oder Evaporation der Mutterlauge bei erhöhten Temperaturen oder im Vakuum und Aufkonzentration des Feststoffs abgetrennt.

Nach dem Abtrennen kann sich mindestens ein zusätzlicher Waschschritt, mindestens ein zusätzlicher Trocknungsschritt und/oder mindestens ein zusätzlicher Calcinierungsschritt anschließen.

Schließt sich im erfindungsgemäßen Verfahren mindestens ein Waschschritt an, so wird bevorzugt mit mindestens einem bei der Synthese verwendeten Lösungsmittel gewaschen.

Schließt sich im erfindungsgemäßen Verfahren, gegebenenfalls nach mindestens einem Waschschritt, mindestens ein Trocknungsschritt an, so wird das Gerüstmaterial-Feststoff bei Temperaturen im Allgemeinen im Bereich von 20 bis 120 °C, bevorzugt im Bereich von 40 bis 100 °C und besonders bevorzugt im Bereich von 56 bis 60 °C getrocknet.

Ebenfalls bevorzugt ist das Trocknen im Vakuum, wobei die Temperaturen im Allgemeinen so gewählt werden können, dass das mindestens eine Waschmittel zumindest teilweise, bevorzugt im Wesentlichen vollständig aus dem kristallinen porösen metallorganischen Gerüstmaterial entfernt wird und zugleich die Gerüststruktur nicht zerstört wird.

Die Trocknungszeit liegt im Allgemeinen im Bereich von 0,1 bis 15 h, bevorzugt im Bereich von 0,2 bis 5 h und insbesondere bevorzugt im Bereich von 0,5 bis 1 h.

An den gegebenenfalls mindestens einen Waschschritt und gegebenenfalls mindestens einen Trocknungsschritt kann sich mindestens ein Calcinierungsschritt anschlie-ßen, bei dem die Temperaturen bevorzugt so gewählt werden, dass die Struktur des Gerüstmaterials nicht zerstört wird.

Insbesondere durch Waschen und/oder Trocknen und/oder Calcinieren ist es beispielsweise möglich, mindestens eine Templatverbindung, die gegebenenfalls zur erfindungsgemäßen elektrochemischen Herstellung des Gerüstmaterials eingesetzt wurde, zumindest teilweise, bevorzugt im Wesentlichen quantitativ zu entfernen.

Ebenso wie das elektrochemische Herstellungsverfahren betrifft die vorliegende Erfindung auch das poröse metallorganische Gerüstmaterial an sich, das durch das wie oben beschrieben Verfahren hergestellt wird.

Das kristalline poröse metallorganische Gerüstmaterial fällt im Allgemeinen als feines Pulver an, wobei die Kristalle eine Größe im Bereich von 0,1 bis 100 µm, bestimmt über SEM (Scanning Electron Microscopy), aufweisen.

Die Porengrößen der erfindungsgemäß hergestellten porösen metallorganischen Gerüstmaterialien lassen sich durch Art und Anzahl der mindestens zweizähnigen organischen Verbindung und/oder Art und gegebenenfalls Oxidationsstufe des mindestes einen Metallions, in weiten Bereichen einstellen.

Demgemäß ist es möglich, dass das erfindungsgemäß hergestellte Gerüstmaterial Mikroporen oder Mesoporen oder Makroporen oder Mikro- und Mesoporen oder Mikro- und Makroporen oder Meso- und Makroporen oder Mikro- und Meso- und Makroporen enthält. Insbesondere bevorzugt enthalten die erfindungsgemäß hergestellten Gerüstmaterialien Mikroporen oder Mesoporen oder Mikro- und Mesoporen. Der Begriff "Mikroporen", wie er im Rahmen der vorliegenden Erfindung verwendet wird, bezeichnet Poren mit einem Durchmesser von bis zu 2 nm. Der Begriff "Mesoporen", wie er im Rahmen der vorliegenden Erfindung verwendet wird, bezeichnet Poren mit einem Durchmesser von mehr als 2 nm bis hin zu 50 nm. Diese Definitionen entsprechen den Definitionen, wie sie in Pure Appl. Chem. 45 (1976) S. 71 ff. insbesondere S. 79 zu finden ist. Die Anwesenheit von Mikro- und/oder Mesoporen kann durch Stickstoff-Adsorptionsmessungen bei 77 K gemäß DIN 66131 und DIN 66135 und DIN 66134 bestimmt werden.

Demgemäß beschreibt die vorliegende Erfindung auch ein wie oben beschriebenes Gerüstmaterial, das dadurch gekennzeichnet ist, dass es Mikroporen oder Mesoporen oder sowohl Mikro- als auch Mesoporen enthält.

Die spezifische Oberfläche der erfindungsgemäß hergestellten kristallinen porösen metallorganischen Gerüstmaterialien, bestimmt über DIN 66135, liegt im Allgemeinen bei mindestens 5 m²/g, insbesondere bei mehr als 5 m²/g, weiter bevorzugt bei mindestens 10 m²/g, insbesondere bei mehr als 10 m²/g, weiter bevorzugt bei mindestens 50 m²/g, insbesondere bei mehr als 50 m²/g, weiter bevorzugt bei mindestens 100 m²/g, insbesondere bei mehr als 100 m²/g, weiter bevorzugt bei mindestens 250 m²/g, insbesondere bei mehr als 250 m²/g, weiter bevorzugt bei mindestens 500 m²/g, insbesondere bei mehr als 500 m²/g, wobei die spezifische Oberfläche bis hin zu mehr als 1000 m²/g, wie beispielsweise mehr als 2000 m²/g, weiter beispielsweise mehr als 3000 m²/g und insbesondere beispielsweise mehr als 4000 m²/g betragen kann.

Der Begriff "spezifische Oberfläche", wie er im Rahmen der vorliegenden Erfindung verwendet wird, bezeichnet die Oberfläche, wie sie gemäß des Langmuirmodells nach DIN 66135 bei 77 K bestimmt wird.

Demgemäß betrifft die vorliegende Erfindung auch ein wie oben beschriebenes metallorganisches Gerüstmaterial, das dadurch gekennzeichnet ist, dass es eine nach DIN 66135 bestimmte spezifische Oberfläche von größer oder gleich 250 m²/g aufweist.

Gemäß einer weiteren Ausführungsform des erfindungsgemäßen Verfahrens wird das von der Mutterlauge abgetrennte poröse metallorganische Gerüstmaterial zu einem oder mehreren Formkörpern verformt.

Hinsichtlich der möglichen Geometrien dieser Formkörper existieren im Wesentlichen keine Beschränkungen. Beispielsweise sind unter anderem Pellets wie beispeislweise scheibenförmige Pellets, Pillen, Kugeln, Granulat, Extrudate wie beispielsweise Stränge, Waben, Gitter oder Hohlkörper zu nennen.

Zur Herstellung dieser Formkörper sind grundsätzlich sämtliche geeigneten Verfahren möglich. Im Rahmen der vorliegenden Erfindung sind unter anderem folgende Verfahrensführungen bevorzugt:
- Kneten des Gerüstmaterials allein oder zusammen mit mindestens einem Bindemittel und/oder mindestens einem Anteigungsmittel und/oder mindestens einer Templatverbindung unter Erhalt eines Gemisches;
   Verformen des erhaltenen Gemisches mittels mindestens einer geeigneten Methode wie beispielsweise Extrudieren;
   Optional Waschen und/oder Trocknen und/oder Calcinieren des Extrudates; Optional Konfektionieren.

- Aufbringen des Gerüstmaterials auf mindestens ein gegebenenfalls poröses Trägermaterial. Das erhaltene Material kann dann gemäß der vorstehend beschriebenen Methode zu einem Formkörper weiterverarbeitet werden.
- Aufbringen des Gerüstmaterials auf mindestens ein gegebenenfalls poröses Substrat.

Kneten und Verformen kann gemäß jedes geeigneten Verfahrens erfolgen, wie beispielsweise in Ullmanns Enzyklopädie der Technischen Chemie, 4. Auflage, Band 2, S. 313 ff. (1972) beschrieben, deren diesbezüglicher Inhalt durch Bezugnahme in den Kontext der vorliegenden Anmeldung vollumfänglich einbezogen wird.

Beispielsweise bevorzugt kann das Kneten und/oder Verformen mittels einer Kolbenpresse, Walzenpresse in Anwesenheit oder Abwesenheit mindestens eines Bindermaterials, Compoundieren, Pelletieren, Tablettieren, Extrudieren, Co-Extrudieren, Verschäumen, Verspinnen, Beschichten, Granulieren, bevorzugt Sprühgranulieren, Versprühen, Sprühtrocknen oder einer Kombination aus zwei oder mehr dieser Methoden erfolgen.

Ganz besonders werden im erfindungsgemäßen Verfahren Pellets und/oder Tabletten hergestellt.

Das Kneten und/oder Verformen kann bei erhöhten Temperaturen wie beispielsweise im Bereich von Raumtemperatur bis 300 °C und/oder bei erhöhtem Druck wie beispielsweise im Bereich von Normaldruck bis hin zu einigen hundert bar und/oder in einer Schutzgasatmosphäre wie beispielsweise in Anwesenheit mindestens eines Edelgases, Stickstoff oder einem Gemisch aus zwei oder mehr davon erfolgen.

Das Kneten und/oder Verformen wird gemäß einer weiteren Ausführungsform des erfindungsgemäßen Verfahrens unter Zugabe mindestens eines Bindemittels durchgeführt, wobei als Bindemittel grundsätzlich jede chemische Verbindung eingesetzt werden kann, die die zum Kneten und/oder Verformen gewünschte Viskosität der zu verknetenden und/oder verformenden Masse gewährleistet. Demgemäß können Bindemittel im Sinne der vorliegenden Erfindung sowohl viskositätserhöhende als auch viskositätserniedrigende Verbindungen sein.

Als unter anderem bevorzugte Bindemittel sind beispielsweise Aluminiumoxid oder Aluminiumoxid enthaltende Binder, wie sie beispielsweise in der WO 94/29408 beschrieben sind, Siliciumdioxid, wie es beispielsweise in der EP 0 592 050 A1 beschrieben ist, Mischungen ais Siliciumdioxid und Aluminiumoxid, wie sie beispielsweise in der WO 94/13584 beschrieben sind, Tonminerale, wie sie beispielsweise in der JP 03-037156 A beschrieben sind, beispielsweise Montmorillonit, Kaolin, Bentonit, Hallosit, Dickit, Nacrit und Anauxit, Alkoxysilane, wie sie beispielsweise in der EP 0 102 544 B1 beschrieben sind, beispielsweise Tetraalkoxysilane wie beispielsweise Tetramethoxysilan, Tetraethoxysilan, Tetrapropoxysilan, Tetrabutoxysilan, oder beispielsweise Trialkoxysilane wie beispielsweise Trimethoxysilan, Triethoxysilan, Tripropoxysilan, Tributoxysilan, Alkoxytitanate, beispielsweise Tetraalkoxytitanate wie beispielsweise Tetramethoxytitanat, Tetraethoxytitanat, Tetrapropoxytitanat, Tetrabutoxytitanat, oder beispielsweise Trialkoxytitanate wie beispielsweise Trimethoxytitanat, Triethoxytitanat, Tripropoxytitanat, Tributoxytitanat, Alkoxyzirkonate, beispielsweise Tetraalkoxyzirkonate wie beispielsweise Tetramethoxyzirkonat, Tetraethoxyzirkonat, Tetrapropoxyzirkonat, Tetrabutoxyzirkonat, oder beispielsweise Trialkoxyzirkonate wie beispielsweise Trimethoxyzirkonat, Triethoxyzirkonat, Tripropoxyzirkonat, Tributoxyzirkonat, Silikasole, amphiphile Substanzen und/oder Graphite zu nennen. Insbesondere bevorzugt ist Graphit.

Als viskositätssteigernde Verbindung kann beispielsweise auch, gegebenenfalls zusätzlich zu den oben genannten Verbindungen, eine organische Verbindung und/oder ein hydrophiles Polymer wie beispielsweise Cellulose oder ein Cellulosederivat wie beispielsweise Methylcellulose und/oder ein Polyacrylat und/oder ein Polymethacrylat und/oder ein Polyvinylalkohol und/oder ein Polyvinylpyrrolidon und/oder ein Polyisobuten und/oder ein Polytetrahydrofuran eingesetzt werden.

Als Anteigungsmittel kann unter anderem bevorzugt Wasser oder mindestens ein Alkohol wie beipielsweise ein Monoalkohol mit 1 bis 4 C-Atomen wie beispielsweise Methanol, Ethanol, n-Propanol, iso-Propanol, 1-Butanol, 2-Butanol, 2-Methyl-1-propanol oder 2-Methyl-2-propanol oder ein Gemisch aus Wasser und mindestens einem der genannten Alkohole oder ein mehrwertiger Alkohol wie beispielsweise ein Glykol, bevorzugt ein wassermischbarer mehrwertiger Alkohol, allein oder als Gemisch mit Wasser und/oder mindestens einem der genannten einwertigen Alkohole eingesetzt werden.

Weitere Additive, die zum Kneten und/oder Verformen eingesetzt werden können, sind unter anderem Amine oder Aminderivate wie beispielsweise Tetraalkylammonium-Verbindungen oder Aminoalkohole und Carbonat enthaltende Verbindungen wie etwa Calciumcarbonat. Solche weiteren Additive sind etwa in der EP 0 389 041 A1, der EP 0 200 260 A1 oder der WO 95/19222 beschrieben, deren diesbezüglicher Inhalt durch Bezugnahme in den Kontext der vorliegenden Anmeldung vollumfänglich aufgenommen ist.

Die Reihenfolge der Additive wie Templatverbindung, Binder, Anteigungsmittel, viskositätssteigernde Substanz beim Verformen und Kneten ist grundsätzlich nicht kritisch.

Gemäß einer weiteren bevorzugten Ausführungsform des erfindungsgemäßen Verfahrens wird der gemäß Kneten und/oder Verformen erhaltene Formkörper mindestens einer Trocknung unterzogen, die im Allgemeinen bei einer Temperatur im Bereich von 25 bis 300 °C, bevorzugt im Bereich von 50 bis 300 °C und besonders bevorzugt im Bereich von 100 bis 300 °C durchgeführt wird. Ebenso ist es möglich, im Vakuum oder unter Schutzgasatmosphäre oder durch Sprühtrocknung zu trocknen.

Gemäß einer besonders bevorzugten Ausführungsform wird im Rahmen dieses Trocknungsvorgangs mindestens eine der als Additive zugesetzten Verbindungen zumindest teilweise aus dem Formkörper entfernt.

Gemäß einer weiteren Ausführungsform des erfindungsgemäßen Verfahrens wird das Gerüstmaterial auf mindestens ein gegebenenfalls poröses Material aufgebracht. Bevorzugt wird hierbei ein poröses Substrat eingesetzt.

Insbesondere bevorzugt erfolgt dieses Aufbringen über Imprägnieren mit einer Flüssigkeit, Tränken in einer Flüssigkeit, Aufsprühen, Ablagern aus flüssiger Phase, Ablagern aus der Gasphase (vapor deposition), Ausfällen (Präzipitation), Co-Präzipitation, Beschichten.

Als gegebenenfalls poröses Substrat werden bevorzugt Aluminiumoxid, Silikagel, Silikate, Diatomeenerden, Kaolin, .Magnesiumoxid, Aktivkohle, Titandioxid und/oder Zeolithe eingesetzt.

Werden beispielsweise nicht-poröse Substrate verwendet, so können gemäß einer weiteren Ausführungsform des erfindungsgemäßen Verfahrens durch Aufbringen des porösen metallorganischen Gerüstmaterials auf einen nicht-porösen Formkörper Schalenstrukturen hergestellt werden, wie sie von Schalenkatalysatoren her bekannt sind.

Demgemäß beschreibt die vorliegende Erfindung auch einen Formkörper, enthaltend mindestens ein wie oben beschriebenes poröses metallorganisches Gerüstmaterial und/oder ein Gerüstmaterial, erhältlich durch ein wie oben beschriebenes Verfahren.

Selbstverständlich ist es im Rahmen des erfindungsgemäßen Verfahrens auch möglich, bei der Herstellung der Formkörper mindestens einen geeigneten Porenbildner zuzusetzen. Als Porenbildner können im erfindungsgemäßen Verfahren sämtliche Verbindungen eingesetzt werden, die bezüglich des fertigen Formkörpers eine bestimmte Porengröße, eine bestimmte Porengrößenverteilung und/oder bestimmte Porenvolumina bereitstellen. Bevorzugt werden als Porenbildner im erfindungsgemäßen Verfahren unter anderem polymere Vinylverbindungen wie beispielsweise Polystyrol, Polyacrylate, Polymethacrylate, Polyolefine, Polyamide und Polyester. Ganz besonders bevorzugt sind etwa Verbindungen als Porenbildner, die sich bei den Calcinierungstemperaturen des erfindungsgemäßen Verfahrens zumindest teilweise, bevorzugt im Wesentlichen vollständig entfernen lassen. Diesbezüglich sei etwa Malonsäure genannt.

Die erfindungsgemäß hergestellten porösen metallorganischen Gerüstmaterialien und/oder die erfindungsgemäße hergestellten Formkörper, enthaltend mindestens ein erfindungsgemäß hergestelltes poröses metallorganisches Gerüstmaterial können grundsätzlich in jeder denkbaren Weise verwendet werden. Besonders bevorzugt ist die Verwendung als Pigmente oder als Sensoren, als elektrischer Leiter oder als lonenleiter.

Insbesondere bevorzugt sind hierbei Anwendungen, in denen die hohe spezifische Oberfläche der Gerüstmaterialien genutzt werden kann.

Insbesondere bevorzugt werden die Gerüstmaterialien, gegebenenfalls enthalten in einem Formkörper, zur Reinigung von Gasen und/oder Flüssigkeiten, als Katalysatoren, zur Aufnahme und/oder Speicherung und/oder Abgabe von Flüssigkeiten und/oder Gasen eingesetzt.

Demgemäß betrifft die vorliegende Erfindung auch die Verwendung eines wie oben beschriebenen porösen metallorganischen Gerüstmaterials oder eines gemäß oben beschriebenen Verfahren erhältlichen porösen metallorganischen Gerüstmaterials zur Reinigung mindestens einer Flüssigkeit und/oder mindestens eines Gas oder als Speichermedium für mindestens eine Flüssigkeit und/oder mindestens ein Gas.

Besonders bevorzugt ist die Verwendung zur Speicherung mindestens einen Gases, wobei als Gase insbesondere Wasserstoff, C₁-C₄-Kohienwasserstoffe wie beispielsweise Methan, Ethan, Propan, Butan und insbesondere Methan zu nennen sind.

Weiter insbesondere bevorzugt wird das erfindungsgemäße poröse metallorganische Gerüstmaterial eingesetzt zur Speicherung mindestens eines Gases und/oder mindestens einer Flüssigkeit, besonders bevorzugt mindestens eines Gases, insbesondere bevorzugt zur Speicherung von Methan oder Wasserstoff, in einem Behälter unter einem Druck im Bereich von 1 bis 750 bar, beispielsweise bevorzugt im Bereich von 1 bis 150 bar, weiter bevorzugt im Bereich von 1 bis 80 bar, weiter bevorzugt im Bereich von 45 bis 80 bar und besonders bevorzugt im Bereich von 50 bis 80, oder beispielsweise bevorzugt im Bereich von 45 bis 750 bar, weiter bevorzugt im Bereich von 45 bis 150 bar, weiter bevorzugt im Bereich von 50 bis 150 bar und besonders bevorzugt im Bereich von 50 bis 80 bar.

Solche Behälter können beispielsweise im Rahmen einer Brennstoffzelle verwendet werden, wie sie beispielsweise zum Betrieb von stationären, mobilen und/oder portablen Anwendungen eingesetzt werden kann. Als solche Anwendungen sind etwa Kraftwerke, Kraftfahrzeuge, Lastkraftwagen, Busse, kabellose Anwendungen, Mobiltelefone oder Laptops zu nennen.

Dabei kann dieser Behälter grundsätzlich jede geeignete Geometrie aufweisen. Durch die erfindungsgemäß möglichen niedrigen Drücke sind bevorzugt auch Behälter möglich, die von der Standard-Zylindergeometrie abweichen und den jeweiligen Erfordernissen, beispielsweise den spezifischen Raumvorgaben im Automobilbau variabel anpassbar sind. Dadurch können die variabel gestaltbaren Behälter in anderweitig nicht nutzbare Hohlräume eines Automobils eingepasst werden und wertvoller Stau- und Nutzraum gewonnen werden.

Die folgenden Beispiele und Figuren sollen die vorliegende Erfindung illustrieren.

Es zeigen im Einzelnen:

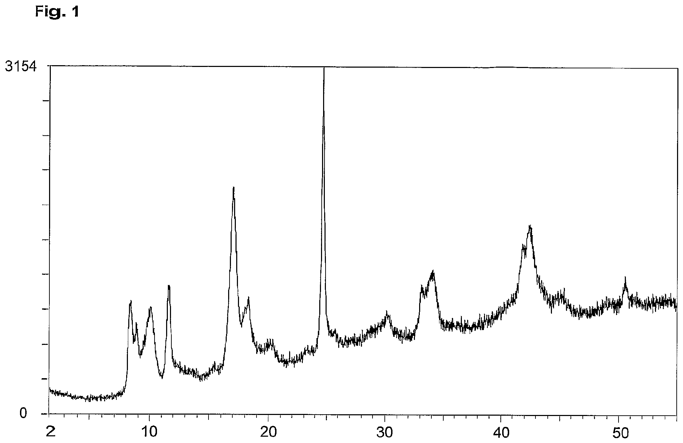

- Figur 1: das Röntgendiffraktogramm des Cu-MOF gemäß Beispiel 2. Die Rechtswertachse stellt die 2Θ-Skala dar, auf der Hochwertachse sind die Lin (Counts) aufgetragen;

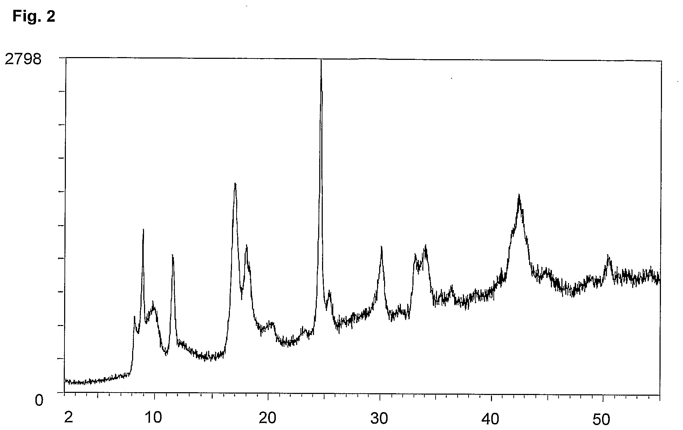

- Figur 2: das Röntgendiffraktogramm des Cu-MOF gemäß Beispiel 3. Die Rechtswertachse stellt die 2Θ-Skala dar, auf der Hochwertachse sind die Lin (Counts) aufgetragen;

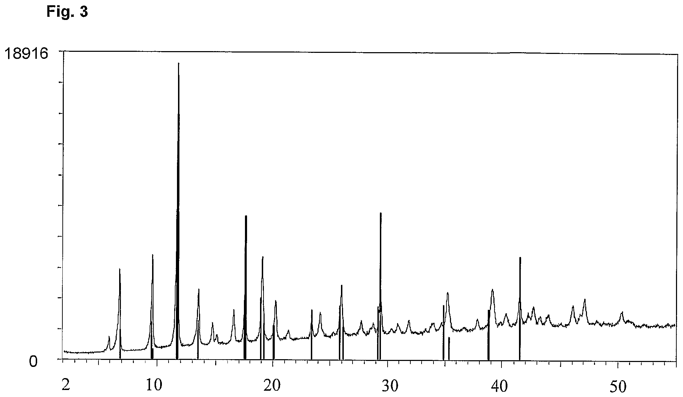

- Figur 3: das Röntgendiffraktogramm des Cu-MOF gemäß Beispiel 5. Die Rechtswertachse stellt die 2Θ-Skala dar, auf der Hochwertachse sind die Lin (Counts) aufgetragen;

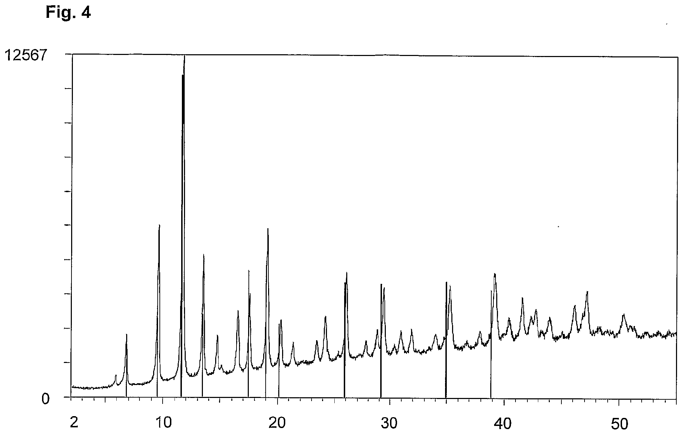

- Figur 4: das Röntgendiffraktogramm des Cu-MOF gemäß Beispiel 9. Die Rechtswertachse stellt die 2Θ-Skala dar, auf der Hochwertachse sind die Lin (Counts) aufgetragen.

### Beispiele

### Beispiel 1: Herstellung eines Zn-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Zinkelektroden (Dicke ca. 2 mm; zugewandte Flächen jeweils 7,1 cm²) wurde eine Mischung aus 47,5g Diethylformamid, 4,0 g Terephthalsäure, 5,0 g Maleinsäuredimethylester und 1,0 g Methyltributylammoniummethylsulfat (MTBS) bei 53-57°C elektrolysiert. Bei einer konstanten Stromstärke von 0,2 A stieg die Zellspannung im Laufe der Elektrolyse von 15,8 V innerhalb von 3 h allmählich auf 19,2 V an. Das Ende der Elektrolyse war an einem weiteren deutlichen Spannungsanstieg auf über 30 V zu erkennen. Nach 4 h wurde abgebrochen. Es war eine dichte weiße Suspension entstanden, die sich zügig absetzte. Der resultierende Niederschlag wurde im Stickstoffstrom abfiltriert und 2 mal mit 50 ml Chloroform gewaschen. Der Filterkuchen wurde in einer Stickstoffatmosphäre in eine Glasflasche überführt und am Hochvakuum (bis 5*10⁻⁵ mbar erreicht wurden) aktiviert. Ausbeute: 4,8 g (Oberfläche nach Langmuir gemäß DIN 66135: 350 m²/g).

### Beispiel 2: Herstellung eines Cu-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Kupferelektroden (Dicke ca. 2 mm; zugewandte Flächen: jeweils 9,9 cm²) wurde eine Mischung aus 47,5g Diethylformamid, 4,0 g Terephthalsäure, 5,0 g Maleinsäuredimethylester und 1,0 g Methyltributylammoniummethylsulfat (MTBS) bei 21 °C elektrolysiert. Bei einer konstanten Stromstärke von 0,2 A stieg die Zellspannung im Laufe der Elektrolyse von 23,1 V auf 33,8 V an. Nach 4 h wurde abgebrochen. Es war eine dichte türkisfarbene Suspension entstanden, die sich zügig absetzte. Der resultierende Niederschlag wurde im Stickstoffstrom abfiltriert und 2 mal mit 50 ml Chloroform gewaschen. Der Filterkuchen wurde in einer Stickstoffatmosphäre in eine Glasflasche überführt und am Hochvakuum (bis 5*10⁻⁵ mbar erreicht wurden) aktiviert. Ausbeute: 5,1 g (Oberfläche nach Langmuir gemäß DIN 66135: 256 m²/g).

### Beispiel 3: Herstellung eines Cu-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Kupferelektroden (Dicke ca. 2 mm; zugewandte Flächen: jeweils 9,9 cm²) wurde eine Mischung aus 47,5g Diethylformamid, 4,0 g Terephthalsäure, 5,0 g Maleinsäuredimethylester und 1,0 g Methyltributylammoniummethylsulfat (MTBS) bei 58-61 °C elektrolysiert. Bei einer konstanten Stromstärke von 0,2 A stieg die Zellspannung im Laufe der Elektrolyse von 13,8 V auf 18,0 V an. Nach 4 h wurde abgebrochen. Es war eine dichte türkisfarbene Suspension entstanden, die sich zügig absetzte. Der resultierende Niederschlag wurde im Stickstoffstrom abfiltriert und 2 mal mit 50 ml Chloroform gewaschen. Der Filterkuchen wurde in einer Stickstoffatmosphäre in eine Glasflasche überführt und am Hochvakuum (bis 5*10⁻⁵ mbar erreicht wurden) aktiviert. Ausbeute: 4,5 g (Oberfläche nach Langmuir gemäß DIN 66135: 477 m²/g).

### Beispiel 4: Herstellung eines Mg-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Elektroden (Dicke ca. 2 mm; zugewandte Flächen: jeweils 9,9 cm²), wobei die Anode aus Magnesium und die Kathode aus Kupfer bestand, wurde eine Mischung aus 47,5 g Diethylformamid, 4,0 g Terephthalsäure, 5,0 g Maleinsäuredimethylester und 1,0 g Methyltributylammoniummethylsulfat (MTBS) bei 58-61 °C elektrolysiert. Bei einer konstanten Stromstärke von 0,2 A stieg die Zellspannung im Laufe der Elektrolyse von 13,8 V auf 18,0 V an. Nach 4 h wurde abgebrochen. Es war eine hellgraue Suspension entstanden, die sich zügig absetzte. Der resultierende Niederschlag wurde im Stickstoffstrom abfiltriert und 2 mal mit 50 ml Chloroform gewaschen. Der Filterkuchen wurde in einer Stickstoffatmosphäre in eine Glasflasche überführt und am Hochvakuum (bis 5*10⁻⁵ mbar erreicht wurden) aktiviert. Ausbeute: 3,5 g (Oberfläche nach Langmuir gemäß DIN 66135: 10,7 m²/g).

### Beispiel 5: Herstellung eines Cu-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Kupferelektroden (Dicke ca. 2 mm; zugewandte Flächen: jeweils 9,9 cm²) wurde eine Lösung aus 50,0 g Ethanol, 5,3 g 1,3,5-Benzoltricarbonsäure und 1,0 g Methyltributylammoniummethylsulfat (MTBS) bei 53-58°C elektrolysiert. Bei einer konstanten Stromstärke von 0,2 A lag die Zellspannung im Laufe der Elektrolyse bei 18,0 V bis 20 V. Das Ende der Elektrolyse machte sich durch einen starken Spannungsanstieg auf über 30 V bemerkbar. Nach 4 h wurde abgebrochen. Es war eine dichte türkisfarbene Suspension entstanden, die sich zügig absetzte. Der resultierende Niederschlag wurde im Stickstoffstrom abfiltriert und 2 mal mit 50 ml Chloroform gewaschen. Der Filterkuchen wurde in einer Stickstoffatmosphäre in eine Glasflasche überführt und am Hochvakuum (bis 5*10⁻⁵ mbar erreicht wurden) aktiviert. Ausbeute: 6,3 g (Oberfläche nach Langmuir gemäß DIN 66135: 1260 m²/g).

### Beispiel 6: Herstellung eines Cu-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Kupferelektroden (Dicke ca. 2 mm; zugewandte Flächen: jeweils 9,9 cm²) wurde eine Mischung aus 50,0g Methanol, 1,0 g 2.2'-Bipyridin-5.5'-dicarbonsäure und 0,3 g Methyltributylammoniummethylsulfat (MTBS) bei 51-54°C elektrolysiert. Bei einer konstanten Stromstärke von 0,1 A lag die Zellspannung im Laufe der Elektrolyse stabil bei 6 V. Nach 1,3 h wurde abgebrochen. Es war eine graue Suspension entstanden, die sich zügig absetzte. Die überstehende Lösung war farblos. Der resultierende Niederschlag wurde abgesaugt, mehrfach mit Methanol gewaschen und getrocknet. Ausbeute: 1,4 g. Der Niederschlag hatte ein atomares Cu/N/C-Verhältnis von 1:2:12.

### Beispiel 7: Herstellung eines Co-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Kobaltelektroden (Dicke ca. 2 mm; zugewandte Flächen: jeweils 9,9 cm²) wurde eine Mischung aus 50 g Methanol, 4,0 g Terephthalsäure und 1,0 g Methyltributylammoniummethylsulfat (MTBS) bei 54-65°C elektrolysiert. Bei einer konstanten Stromstärke von 0,2 A lag die Zellspannung im Laufe der Elektrolyse bei 5 V. Nach 4 h wurde abgebrochen. Es war eine rosafarbene Suspension entstanden, die sich zügig absetzte. Der resultierende Niederschlag wurde im Stickstoffstrom abfiltriert und 2 mal mit 50 ml Chloroform gewaschen. Der Filterkuchen wurde in einer Stickstoffatmosphäre in eine Glasflasche überführt und am Hochvakuum (bis 5*10⁻⁵ mbar erreicht wurden) aktiviert. Ausbeute: 5 g (Oberfläche nach Langmuir gemäß DIN 66135: 7 m²/g). Die Elektroden hatten im Laufe der Elektrolyse 1,19 g verloren, was einer Abbaurate von 1,5 F/Mol Co entspricht.

### Beispiel 8: Herstellung eines Zn-MOF in einer Spaltzelle

In einem N₂-überdeckten 100 ml Glaszylinder mit Heizmantel, Magnetrührer, Innenthermometer und mit zwei planparallel, in 1 cm Abstand angeordneten Zinkelektroden (Dicke ca. 2 mm; zugewandte Flächen jeweils 0,99 cm²) wurde eine Mischung aus 47,5g Diethylformamid, 4,8 g 2.5-Dihydroxyterephthalsäure, 5,0 g Maleinsäuredimethylester und 1,0 g Methyltributylammoniummethylsulfat (MTBS) bei 52-61°C elektrolysiert. Bei einer konstanten Stromstärke von 0,2 A stieg die Zellspannung im Laufe der Elektrolyse von 12,5 V innerhalb von 3 h allmählich auf 37,0 V an. Nach 4 h wurde abgebrochen. Es war eine dichte gelb-beige Suspension entstanden, die sich zügig absetzte. Der resultierende Niederschlag wurde im Stickstoffstrom abfiltriert und 2 mal mit 50 ml Chloroform gewaschen. Der Filterkuchen wurde in einer Stickstoffatmosphäre in eine Glasflasche überführt und am Hochvakuum (bis 5*10⁻⁵ mbar erreicht wurden) aktiviert. Ausbeute: 4,3 g (Oberfläche nach Langmuir gemäß DIN 66135: 21 m²/g).

### Beispiel 9: Herstellung eines Cu-MOF in einer Plattenstapelzelle

In einem Elektrolysekreis, bestehend aus einer Kreislaufpumpe, einem Glaskühler zum Temperieren des Elektrolyten, einem Abgaskühler, Messeinrichtungen zur Messung des Durchflusses, der Zellspannung, der Stromdichte und der Temperatur und einer Plattenstapelzelle wurde elektrolysiert. Die Plattenstapelzelle enthielt 5 runde Kupferscheiben mit einer Fläche pro Seite von je 61,9 cm² und einer Dicke von 5 mm. Die Scheiben mit einer zentralen Bohrung von 1,5 cm Durchmesser waren zu einem Stapel angeordnet. Durch Abstandshalter war jede Elektrode durch einen Spalt von 1 mm von den Nachbarelektroden getrennt. Die unterste Elektrode war kathodisch kontaktiert, die oberste anodisch. Die drei mittleren Elektroden hatten jeweils eine kathodische und eine anodische Seite (bipolarer Aufbau). Über die Bodenplatte der Zelle wurde der Elektrolyt durch die zentralen Bohrungen der Platten geleitet und strömte durch die Spalte. Über eine Glashaube, die auf die Bodenplatte fixiert war, wurde der Elektrolyt in den Zellkreis abgeführt und die anodische Kontaktierung bewerkstelligt. Die Anlage war mit Stickstoff inertisiert.

In diesem Zellkreis wurde ein Elektrolyt aus 1075,7 g Methanol, 83,3 g 1,2,3-Benzoltricarbonsäure und 21 g MTBS umgepumpt (130 I/h). Bei einer Stromstärke von 1,3 A und einer Zellspannung von 12,6 bis 19,1 V und einer Temperatur von 20-23°C wurde zweieinhalb Stunden lang elektrolysiert. Der Niederschlag wurde abfiltriert und 2 mal mit 50 ml kaltem Methanol gewaschen. Der hellblaue Niederschlag wurde bei 120 °C über Nacht aktiviert, wobei sich die Farbe nach dunkelblau änderte. Ausbeute 43,6 g (Oberfläche nach Langmuir gemäß DIN 66135: 1649 m²/g)

### Beispiel 10: Herstellung eines Cu-MOF in einer Plattenstapelzelle

Ein analoger Versuch zu Beispiel 9 in Ethanol als Lösemittel erbrachte ein Produkt mit einer Oberfläche von 1585 m²/g nach Langmuir gemäß DIN 66135 und einer Ausbeute von 15,5 g.

### Beispiel 11: Herstellung eines Cu-MOF in einer Rohrzelle

Der Elektrolyt, bestehend aus 144,8 g 1,3,5-Benzoltricarbonsäure, 38 g MTBS und 1867,2 g Methanol, wurde in den Zellkreislauf eingefüllt. Der Zellkreislauf bestand aus einer Rohrzelle, einem Glaskühler, einer Kreiselpumpe und einem Abscheidegefäß unterhalb der Zelle. Die Pumpe förderte den Elektrolyten bzw. die entstehende Suspension im Kreis, wobei sich die Hauptmenge des entstehenden Cu-MOFs im Abscheidegefäß sammelte. Das Abscheidegefäß bestand aus einem 500 ml Volumen fassenden Glasbecher mit Bodenablass. Die Rohrzelle bestand aus einem Edelstahlrohr (Länge: 55 cm, Innendurchmesser: 4,1 cm) mit einer Polypropylenhaube und einem Polypropylenboden. Haube und Boden hatten Öffnungen für die Zu- und Ableitung des im Zellkreislauf zirkulierenden Elektrolyten. Die Haube hatte eine verschraubbare Öffnung, durch die die Kupferanode gasdicht herausragte. Der Boden hatte eine 3 mm starke kreisförmige Vertiefung (Durchmesser entsprechend dem Anodenstab), in der die Anode aufsaß. Die Öffnung der Haube und die Vertiefung des Bodens waren konzentrisch mit dem Querschnitt der Stahlkathode angeordnet und garantierten damit einen ringsum homogenen Abstand zwischen Kathode und Anode. Die Kupferanode bestand aus einem 100 cm langen Kupferstab mit einem Durchmesser von 4 cm, der im Bereich der Stahlkathode verjüngt war. Dort hatte sie einen Durchmesser von 3,7 cm, was einer aktiven Oberfläche von 639 cm² entsprach.

Bei einer Stromstärke von 14,5 A und einer Zellspannung von 5,6 bis 5,9 V wurde bis zu einem Stromeinsatz von 1,5 F/(Mol Benzoltricarbonsäure) gefahren. Anschließend wurde stromlos für mehrere Stunden weiter umgepumpt, wobei sich ein großer Teil der MOF-Suspension im Abscheidegefäß sammelte. Auf diese Weise konnten mehrere Batches frischen Elektrolyseeinsatzes hintereinander gefahren werden, ohne dass es zu einer Akkumulation von Festkörper in der Zelle oder im Zellkreis kam.

Die Aufarbeitung dieser MOF-Austräge führt zu durchschnittlich 105 bis 115 g Festkörper pro Ansatz mit Oberflächen, bestimmt nach Langmuir gemäß DIN 66135, im Bereich von 1300 bis 1500 m²/g.

### Beispiel 12: Herstellung des Tetrapropylammoniumsalzes der 1,3,5-Benzoltricarbonsäure

Eine methanolische Lösung von 0,35 Mol 1.3.5-Benzoltricarbonsäure pro kg Methanol (7,2 Gew.%) erreichte bei Zusatz von 0,035 Mol Tetrapropylammoniumhydoxid, 50%-ig in H₂O, eine spezifische Leitfähigkeit von 1,0 mS/cm. 10 Mol% der 1,3,5-Benzoltricarbonsäure waren in dieser Lösung zum Monosalz umgesetzt worden. Die Lösung enthielt 7,1 g Wasser, entsprechend 0,7 Gew.%.

### Beispiel 13: Vergleich erfindungsgemäß hergestellter Cu-MOFs mit konventionell hergestellten Kupfer-MOFs

Zwei auf elektrochemischem Wege hergestellte Cu-MOFs (EMOF-1 und EMOF-2) werden röntgenabsorptionsspektroskopisch untersucht und mit einem Cu-MOF, der nach dem Stand der Technik hergestellt wird (MOF-ST), verglichen.

EMOF-ST wird wie folgt hergestellt:

| **Einsatzstoff** | **Molar** | **berechnet** | **experimentell** |
|---|---|---|---|
| 1) 1,3,5-Benzoltricarbonsäure | 0,116 mol | 24,4g | 24,4g |
| 2) Ethanol | 2,13 mol | 98,5g | 98,5g |
| 3) Kupfer(II)-nitrat*2,5 Wasser | 0,233 mol | 54,3g | 54,3g |
| 4) Wasser, deionisiert | 6,94 mol | 125,0g | 125,0g |

In zwei Autoklavenbecher werden je 12,2g Benzoltricarbonsäure in 49,3g Ethanol unter Rühren suspendiert. In 2 Bechergläser werden je 27,2g Kupfernitrat in 62,5g Wasser gelöst. Die Kupfernitratlösung wird nun in die Bechergläser gefüllt, wobei sich ein hellblaues Gel bildet. Dieses wird 30 Min gerührt, danach werden die Autoklavenbecher geschlossen.
Die Kristallisation erfolgt bei 110°C über 18 h.
Der Niederschlag wird abfiltriert und 2 mal mit Wasser gewaschen. Der Filterkuchen wird bei 110 °C getrocknet.

### Analytik:

Oberfläche Langmuir: 1316 m²/g mit N₂/77K gemessen

### Chemische Analyse:

Cu: 32%
N: 1,1%

Bei EMOF-1 werden 1788,3 g Methanol, 70,0 g 1,3,5-Benzoltricarbonsäure, 28,6 g MTBS (60% in Methanol) sowie eine Cu-Elektrode eingesetzt und das EMOF-1 analog zu den vorigen Beispielen erhalten.

Oberfläche Langmuir: 1766 m²/g mit N₂/ 77K gemessen.

Somit sind MOF-ST und EMOF-1 direkt vergleichbar. es zeigt sich dass EMOF-1 über eine größere aktive Oberfläche verfügt.

EMOF-2 wird analog zu EMOF-1 hergestellt. Hierbei wird jedoch Isophtalsäure eingesetzt. Die nachfolgend näher erläuterte röntgenabsorptionsspektroskopische Untersuchung zeigt, dass sich die Spektren der EMOFs vergleichbare Charakteristika in den Spektren aufweisen und sich von MOF-ST dahingehend stark unterscheiden.

Die Probenpräparation und die anschließenden Messungen für die Röntgenabsorptionsspektroskopie werden für alle Cu-MOFs unter den gleichen Bedingungen durchgeführt.

Zur Probenvorbehandlung werden alle Proben mit Ethanol auf Polyethylenpresslingen, die einen Durchmesser von 13 mm aufweisen, aufgeschwemmt. Zur Stabilisierung der Proben auf den PE-Presslingen sind diese in Klebeband verpackt worden. Die Mes-. sungen der Röntgenabsorptionsspektren sind an der Beamline E4 des HASYLAB am DESY durchgeführt worden. Dieses Gerät ist mit einem Si(111) Doppelkristallmonochromator und einem fokussierenden Spiegel mit Goldbeschichtung ausgerüstet. Zur weiteren Unterdrückung der höheren Harmonischen wird ein mit Gold beschichteter Planspiegel verwendet. Zusätzlich wird bei 60% der maximalen Intensität des Braggpeaks gemessen, was ein Piezoelement mit Feedbacksteurerung ermöglicht. Für die Messung an der Cu K-Kante werden folgende Argondrücke eingestellt: 1. Ionisationskammer 70 mbar, 2. Ionisationskammer 550 mbar und 3. Ionisationskammer 800 mbar. Dies entspricht jeweils Absorptionen von 10 % in der ersten, 50 % in der zweiten und nahezu 100 % in der dritten Ionisationskammer. Als Referenz zur Kalibrierung der E-nergieskala wird eine Kupferfolie zwischen der zweiten und dritten Ionisationskammer mit gemessen.

Die Messprogramme für die Kupferkante sind:

| Energie/eV | Schrittweite /eV | Messzeit/sek. | Kantenlage | x |
|---|---|---|---|---|
| 8820 | 10 | 0,5 | | |
| 8940 | 0,5 | 0,5 | | |
| 9010 | 0,5 | 0,5 | 8979 | 0,9 |
| 10000 | | | | |

Ab der Energie für die eine Kantenlage angegeben ist, wird in äquidistanten Schritten im k-Raum mit einer Wichtung der Messzeit pro Schritt von k^{x}, gemessen. Die Probenspektren wurden mehrmals gemessen; ebenso die Referenzproben.

Die Datenauswertung wurde mit der Software WinXAS 3.1 (Ressler T., J. Synchrotron Radiat., **5** (1998), 118) ausgeführt. Die Datenreduktion erfolgt mit Standardmethoden. Zur Energiekalibrierung wird das E₀ der Referenzfolien, die simultan mit jedem Spektrum mit gemessen werden, herangezogen. Für den hier interessierenden XANES-Bereich der Kupferproben werden Polynome 1. Ordnung für den Vorkanten (8.84 keV - 8.94 keV) und 2. Ordnung für den EXAFS Bereich (9.16 keV - 9.98 keV) zum Abzug des Untergrundes verwendet. Es wird auf den Kantenhub normiert. Zur Konvertierung in den k-Raum wird der 2. Wendepunkt auf der Kante des Probenspektrums verwendet. Die µ0 Anpassung erfolgt mit einer Spline-Funktion (spline7) im Bereich von 1.59 k - 13.1 k.

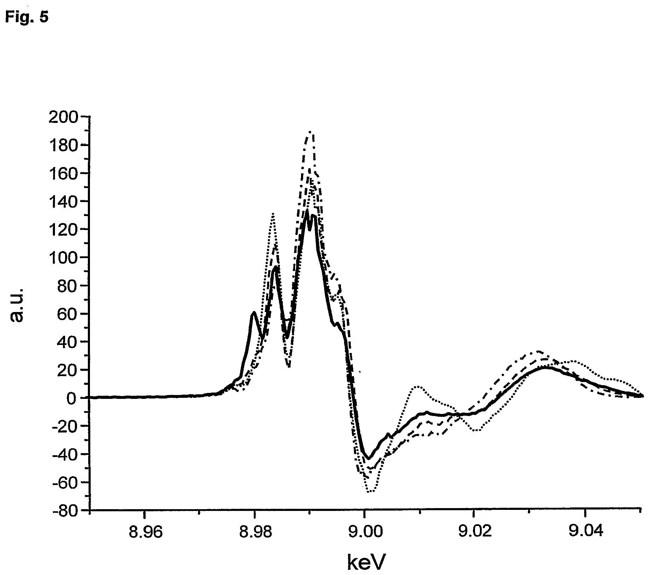

Ein Vergleich mit dem Modell des Tenorit in der Raumgruppe Cc anhand der EXAFS sowie das Fehlen eines Vorkantenpeaks belegen, dass das Kupfer in allen Proben vierfach planar koordiniert ist. Ein Vergleich der ersten Ableitungen der Kanten der Proben zeigt jedoch, dass die nach dem Stand der Technik hergestellte Probe MOF-ST ein zusätzliches Maximum bei etwa 8,9798 keV aufweist. Dies ist in Figur 5 dargestellt. Hierbei bedeuten die Kurven:

| | |
|---|---|
| 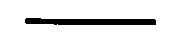 | MOF-ST |
| 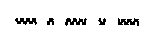 | EMOF-2 |
| ---- | EMOF-1 |
| ·············· | Tenorit |

Dieses Maximum, was einem Wendepunkt im ursprünglichen Absorptionsspektrum entspricht, ist bei den erfindungsgemäß hergestellten Cu-MOFs nicht vorhanden. Ein Vergleich der Probenspektren mit dem des Tenorits ergibt weiterhin, dass aufgrund der energetisch gleichen Lagen der Kantenstrukturen das Kupfer in den untersuchten Proben zweiwertig vorliegt. Hier ist für die Probe MOF-ST eine etwas niedrigere mittlere Oxidationsstufe aufgrund des zusätzlichen Wendepunktes auf der Kante, nicht auszuschließen.

Ein Vergleich der Röntgenabsorptionsspektren von erfindungsgemäß hergestellten Kupfer-MOFs im Vergleich zu denen, die nach Stand der Technik hergestellt werden, zeigen deutliche Unterschiede, so dass es sich bei den erfindungsgemäß hergestellten MOFs um neue Stoffe im Vergleich zu den nach dem Stand der Technik hergestellten MOFs handelt.

## Patentansprüche

1. Verfahren zur elektrochemischen Herstellung eines kristallinen porösen metallorganischen Gerüstmaterials, enthaltend mindestens eine an mindestens ein Metallion koordinativ gebundene, mindestens zweizähnige organische Verbindung ausgewählt aus der Gruppe bestehend aus Di-, Tri- und Tetracarbonsäure, in einem Reaktionsmedium, enthaltend die mindestens eine mindestens zweizähnige organische Verbindung, **dadurch gekennzeichnet, dass** im Reaktionsmedium mindestens ein Metallion durch Oxidation mindestens einer das entsprechende Metall enthaltenden Anode bereitgestellt wird.

2. Verfahren nach Anspruch 1, **dadurch gekennzeichnet, dass** die kathodische Wiederabscheidung des mindestens einen Metallions durch mindestens eine der folgenden Maßnahmen zumindest teilweise verhindert wird:
(i) Verwendung eines Elektrolyten, der die kathodische Bildung von Wasserstoff begünstigt;
(ii) Zusatz mindestens einer Verbindung, die zu einer kathodischen Depolarisation führt;
(iii) Einsatz einer Kathode mit einer geeigneten Wasserstoffüberspannung.

3. Verfahren nach Anspruch 2, **dadurch gekennzeichnet, dass** der Elektrolyt gemäß (i) mindestens ein protisches Lösungsmittel enthält.

4. Verfahren nach Anspruch 2, **dadurch gekennzeichnet, dass** die kathodische Depolarisation eine Hydrodimerisierung ist.

5. Verfahren nach einem der Ansprüche 1 bis 4, **dadurch gekennzeichnet, dass** das Verfahren in einer ungeteilten Elektrolysezelle durchgeführt wird.

6. Verfahren nach einem der Ansprüche 1 bis 5, **dadurch gekennzeichnet, dass** das Verfahren in einer Spaltzelle oder Plattenstapelzelle durchgeführt wird.

7. Verfahren nach Anspruch 6, **dadurch gekennzeichnet, dass** die Spaltzelle oder Plattenstapelzelle bipolar geschaltet ist.

8. Verfahren nach einem der Ansprüche 1 bis 7, **dadurch gekennzeichnet, dass** das Reaktionsmedium Methanol, Ethanol, Dimethylformamid, Diethylformamid oder ein Gemisch aus zwei oder mehr davon enthält.

9. Verfahren nach einem der Ansprüche 1 bis 8, **dadurch gekennzeichnet, dass** als Metallionenquelle eine Kupfer und/oder eine Eisen und/oder eine Zink enthaltende Anode eingesetzt wird.

10. Verfahren nach einem der Ansprüche 1 bis 9, **dadurch gekennzeichnet, dass** als mindestens zweizähnige organische Verbindung eine aromatische Di-, Tri- und/oder Tetracarbonsäure eingesetzt wird.

11. Verfahren nach einem der Ansprüche 1 bis 10, **dadurch gekennzeichnet, dass** das Reaktionsmedium mindestens ein Leitsalz enthält.

12. Verfahren nach Anspruch 11, **dadurch gekennzeichnet, dass** das mindestens eine Leitsalz als Kationenkomponente ein quaternäres Ammoniumion und als Anionenkomponente ein Alkoxysulfat enthält.

13. Verfahren nach einem der Ansprüche 1 bis 12, **dadurch gekennzeichnet ist, dass** der Feststoffgehalt im Bereich von größer oder gleich 0,5 Gew.-% liegt.

14. Kristallines poröses metallorganisches Gerüstmaterial, erhältlich durch ein Verfahren gemäß einem der Ansprüche 1 bis 13.

15. Gerüstmaterial nach Anspruch 14, **dadurch gekennzeichnet, dass** es eine nach DIN 66135 bestimmte spezifische Oberfläche von größer oder gleich 5 m²/g aufweist.

16. Verwendung eines kristallinen porösen metallorganischen Gerüstmaterials gemäß einem der Ansprüche 14 oder 15 oder eines kristallinen porösen metallorganischen Gerüstmaterials, erhältlich durch ein Verfahren gemäß einem der Ansprüche 1 bis 13, als Speichermedium für mindestens eine Flüssigkeit und/oder mindestens ein Gas; als Katalysator, Pigment, Sensor, elektrischer Leiter oder lonenleiter.

## Claims

1. A method of electrochemically preparing a crystalline, porous, metal-organic framework material comprising at least one at least bidentate organic compound selected from the group consisting of di- tri- and tetracarboxylic acid, coordinately bound to at least one metal ion, in a reaction medium comprising the at least one at least bidentate organic compound, wherein at least one metal ion is provided in the reaction medium by the oxidation of at least one anode comprising the corresponding metal.

2. The method according to claim 1, wherein the cathodic redeposition of the at least one metal ion is at least partially prevented by at least one of the following measures:
(i) the use of an electrolyte which promotes the cathodic formation of hydrogen;
(ii) the addition of at least one compound leading to cathodic depolarization;
(iii) the use of a cathode having a suitable hydrogen overpotential.

3. The method according to claim 2 wherein the electrolyte according to (i) comprises at least one protic solvent.

4. The method according to claim 2, wherein the cathodic depolarization is a hydrodimerization.

5. The method according to any one of claims 1 to 4 which is implemented in an undivided electrolytic cell.

6. The method according to any one of claims 1 to 5 which is implemented in a gap cell or plate stack cell.

7. The method according to claim 6, wherein the gap cell or plate stack cell is connected for bipolar operation.

8. The method according to any one of claims 1 to 7, wherein the reaction medium comprises methanol, ethanol, dimethylformamide, diethylformamide or a mixture of two or more of these.

9. The method according to any one of claims 1 to 8, wherein the metal ion source used is a copper- and/or an iron- and/or a zinc-comprising anode.

10. The method according to any one of claims 1 to 9, wherein the at least bidentate organic compound used is an aromatic di, tri- and/or tetracarboxylic acid.

11. The method according to any one of claims 1 to 10, wherein the reaction medium comprises at least one conducting salt.

12. The method according to claim 11, wherein the at least one conducting salt comprises as the cation component a quaternary ammonium ion and as the anion component comprises an alkoxy sulfate.

13. The method according to any one of claims 1 to 12, wherein the solids content is in the range of greater than or equal to 0.5 wt%.

14. A crystalline, porous, metal-organic framework material which can be obtained via the method according to any one of claims 1 to 13.

15. The framework material according to claim 14 which has a specific surface area, determined in accordance with DIN 66135, of greater than or equal to 5 m²/g.

16. The use of the crystalline, porous, metal-organic framework material according to either one of claims 14 or 15, or of a crystalline, porous, metal-organic framework material which can be obtained via the method according to any one of claims 1 to 13 as a storage medium for at least one liquid and/or at least one gas, as a catalyst, pigment, sensor, electrical conductor or ion conductor.

## Revendications

1. Procédé pour la préparation électrochimique d'un matériau de squelette métallo-organique poreux cristallin contenant au moins un composé organique lié par coordination à un ion métallique, au moins bidentate, choisi dans le groupe constitué par un acide dicarboxylique, tricarboxylique ou tétracarboxylique, dans un milieu de réaction, contenant ledit au moins un composé organique au moins bidentate, **caractérisé en ce qu'**au moins un ion métallique est préparé dans le milieu de réaction par oxydation d'au moins une anode contenant le métal correspondant.

2. Procédé selon la revendication 1, **caractérisé en ce que** le redépôt cathodique dudit au moins un ion métallique est empêché au moins partiellement par au moins une des mesures suivantes:
(i) utilisation d'un électrolyte, qui favorise la formation cathodique d'hydrogène;
(ii) addition d'au moins un composé qui conduit à une dépolarisation cathodique;
(iii) utilisation d'une cathode présentant une surtension d'hydrogène appropriée.

3. Procédé selon la revendication 2, **caractérisé en ce que** l'électrolyte selon (i) contient au moins un solvant protique.

4. Procédé selon la revendication 2, **caractérisé en ce que** la dépolarisation cathodique est une hydrodimérisation.

5. Procédé selon l'une quelconque des revendications 1 à 4, **caractérisé en ce que** le procédé est réalisé dans une cellule d'électrolyse non divisée.

6. Procédé selon l'une quelconque des revendications 1 à 5, **caractérisé en ce que** le procédé est réalisé dans une cellule à fente ou dans une cellule à plaques empilées.

7. Procédé selon la revendication 6, **caractérisé en ce que** la cellule à fente ou la cellule à plaques empilées est commutée de manière bipolaire.

8. Procédé selon l'une quelconque des revendications 1 à 7, **caractérisé en ce que** le milieu de réaction contient du méthanol, de l'éthanol, du diméthylformamide, du diéthylformamide ou un mélange de deux ou de plus de deux de ceux-ci.

9. Procédé selon l'une quelconque des revendications 1 à 8, **caractérisé en ce qu'**une anode contenant du cuivre et/ou du fer et/ou du zinc est utilisée comme source d'ions métalliques.

10. Procédé selon l'une quelconque des revendications 1 à 9, **caractérisé en ce qu'**un acide dicarboxylique, tricarboxylique ou tétracarboxylique aromatique est utilisé comme composé organique au moins bidentate.

11. Procédé selon l'une quelconque des revendications 1 à 10, **caractérisé en ce que** le mélange réactionnel contient au moins un sel conducteur.

12. Procédé selon la revendication 11, **caractérisé en ce que** ledit au moins un sel conducteur contient, en tant que composant cationique, un ion d'ammonium quaternaire et, en tant que composant anionique, un alcoxysulfate.

13. Procédé selon l'une quelconque des revendications 1 à 12, **caractérisé en ce que** la teneur en solides se situe dans la plage supérieure ou égale à 0,5% en poids.

14. Matériau de squelette métallo-organique poreux cristallin, pouvant être obtenu par un procédé selon l'une quelconque des revendications 1 à 13.

15. Matériau de squelette selon la revendication 14, **caractérisé en ce qu'**il présente une surface spécifique, déterminée selon la norme DIN 66135, supérieure ou égale à 5 m²/g.

16. Utilisation d'un matériau de squelette métallo-organique poreux, cristallin selon l'une quelconque des revendications 14 ou 15 ou d'un matériau de squelette métallo-organique poreux, cristallin pouvant être obtenu par un procédé selon l'une quelconque des revendications 1 à 13, comme support d'accumulation d'au moins un liquide et/ou d'au moins un gaz; comme catalyseur, pigment, capteur, conducteur électrique ou conducteur ionique.
